(19) Europäisches Patentamt
European Patent Office
Office européen des brevets

(11) **EP 1 469 646 B1**

(12) **EUROPEAN PATENT SPECIFICATION**

(45) Date of publication and mention
of the grant of the patent:
**14.06.2017  Bulletin 2017/24**

(51) Int Cl.:
***H04L 27/26*** *(2006.01)*

(21) Application number: **03020953.0**

(22) Date of filing: **16.09.2003**

(54) **Measurement of transmission time**

Messen von Übertragungszeit

Mesure de temps de transmission

(84) Designated Contracting States:
**DE ES FR GB**

(30) Priority: **15.04.2003  JP 2003110462**

(43) Date of publication of application:
**20.10.2004  Bulletin 2004/43**

(73) Proprietor: **Kabushiki Kaisha Toshiba**
**Tokyo 105-8001 (JP)**

(72) Inventors:
• **Sakuda, Shigeru,**
**Toshiba Corporation**
**Minato-ku,**
**Tokyo 105-8001 (JP)**
• **Shishikura, Hiroyuki,**
**Toshiba Corporation**
**Minato-ku,**
**Tokyo 105-8001 (JP)**

• **Ueno, Shunichi,**
**Toshiba Corporation**
**Minato-ku,**
**Tokyo 105-8001 (JP)**
• **Takahashi, Yasuo,**
**Toshiba Corporation**
**Minato-ku,**
**Tokyo 105-8001 (JP)**
• **Hirose, Shinsuke,**
**Toshiba Corporation**
**Minato-ku,**
**Tokyo 105-8001 (JP)**

(74) Representative: **Henkel, Breuer & Partner**
**Patentanwälte**
**Maximiliansplatz 21**
**80333 München (DE)**

(56) References cited:
**WO-A-98/35458    US-A1- 6 128 276**

## Description

The present invention relates to a transmission time measuring apparatus for a broadcast signal, which is used for, for example, in a transmitting station or a relay station of terrestrial digital broadcast, and which is for measuring transmission time of the terrestrial digital broadcast, and a measuring method therefor, and a transmission apparatus and a relay apparatus using the transmission time measuring apparatus, and a delay time measuring apparatus.

The terrestrial digital broadcast standardized in Europe has the feature that a plurality of transmitting stations commonly have the same transmission frequency by utilizing the robustness against multi-pass which is the feature of an OFDM transmitting method, and a wide range of service area can be covered by the plurality of transmitting stations without co-channel interference due to the same transmission frequency being transmitted within a designated timing range.

In this way, a transmission network such that the plurality of transmitting stations carrying out the same broadcasting service transmit the broadcasting service at the same frequency is called SFN (Single Frequency Network), and is a technical factor which characterizes the digital broadcast (for example, ETSI Draft EN300 744 vl. 2.1 (1999-01) Digital Video Broadcasting (DVB); Frame structure, channel coding and modulation for digital terrestrial television, and ETSI TS 101 191 vl. 2.1 (1998-04) Digital. Video Broadcasting (DVB); DVB mega-frame for single frequency network (SFN) synchronization). In accordance with the SFN technique, it is possible to largely economize frequencies for broadcasting. However, in order to establish the above-described SFN, it is assumed that the plurality of transmitting stations transmit broadcast signals within a predetermined transmission timing error range, and a technique in which the transmission timing of the respective transmitting stations are managed by the entire network is extremely important.

In a case of a terrestrial digital broadcast on the basis of the OFDM transmitting method, there is the feature that a plurality of waves, having the same transmission waveform within a range which is not over a guard interval length, generally do not interfere each other. Accordingly, it is necessary to manage the transmission time such that a reception timing difference of the waves from the plurality of transmitting stations composing the above-described SFN is made to be less than or equal to the aforementioned guard interval length at receiving points in a predetermined service area. In order to prepare the reception timing condition in the wide range of service area, an extremely high accuracy is required for the transmission timing.

However, the transmission output of the terrestrial digital broadcast signal is a noise-shaped waveform, and it is difficult to directly measure the transmission time from the transmission output.

For example, in DVB-T system, as shown in the technical specifications, a method is proposed in which Mega-frame Initialization packet (MIP) is inserted at a studio, and the MIP is detected at the respective transmitting stations, and the timing thereof are measured by a time signal generated by a GPS (Global Positioning System) receiver which is separately prepared, or the like, and the transmission time of the respective transmitting stations are managed.

The above-described method has an advantage that, when signal processing delay time of OFDM modulators and the like which are provided at the respective transmitting stations are already known, the inserted signal is detected at the respective transmitting stations, and due to the signal processing delay time being added to the detected timing, the transmission time of the broadcasting digital signal from the transmitter can be estimated. However, for example, when the OFDM modulators manufactured by different manufacturers are mixed, it is extremely difficult to strictly manage the signal processing delay time. Further, when an repairment of a signal line in the transmitting station or the like is carried out, there is the possibility that the transmission delay time varies, and the problem that an actual transmission time is out of an estimated value arises.

On the other hand, a method in which the transmission time is estimated by utilizing the technique of the terrestrial digital broadcast receiver has been proposed. However, in this method, it is difficult to exactly measure the signal processing delay time of the modulator in the receiver. Further, at the receiver, symbol synchronization detection is carried out by using correlation computing method. However, because the correlation computed output is easily affected by noise and multi-pass, a measurement error easily arises.

Moreover, a method in which the transmission time is estimated by determining a delay profile which is computed from pilot signals inserted in the OFDM signal can be considered. But, anything other than a relative delay time difference cannot be obtained from the delay profile, and in order to measure the relative delay time between the transmitters installed at different places, it is necessary to exactly know a propagation delay from the transmitting station to a point of measurement. However, there are a large number of multi-passes in terrestrial, and because a transmission path characteristic varies in accordance with environmental conditions, it is difficult to exactly know the propagation profile from the transmitting station to the point of measurement. In addition, because radio wave serving as a reference is required, it is necessary to consider places where a reference station and a station which is to be measured are located, and complicated work such as a preliminary survey for measurement or the like is required.

As described above, at present, there is no effective means for measuring the transmission time of a terrestrial digital broadcast signal, and it is difficult to structure the SFN in which it is necessary to exactly grasp transmission time of a plurality of transmitting stations, and to carry out management for a network. In particular, when an repairment of a transmitting station or the like is carried out, there is the possibility that a signal processing delay time differs in accordance with an apparatus which is used, and it is necessary to verify a state of a service area after the repairment. Therefore, there is the problem that complications and administrative costs for the network management increase.

US 6 128 276 A, discloses a "stacked-carrier" spread spectrum communication system based on frequency domain spreading that multiplies a time-domain representation of a baseband signal by a set of superimposed, or stacked, complex sinusoid carrier waves. In a preferred embodiment, the spreading energizes the bins of a large fast Fourier transform (FFT). This provides a considerable savings in computational complexity for moderate output FFT sizes. Point-to-multipoint and multipoint-to-multipoint (nodeless) network topologies are possible. A code-nulling method is included for interference cancellation and enhanced signal separation by exploiting the spectral diversity of the various sources. The basic system may be extended to include multi-element antenna array nulling methods also for interference cancellation and enhanced signal separation using spatial separation. Such methods permit directive and retrodirective transmission systems that adapt or can be adapted to the radio environment. Such systems are compatible with bandwidth-on-demand and higher-order modulation formats and use advanced (maximum-SINR) despreader adaptation algorithms.

Then, an object of the present invention is to provide a transmission time measuring apparatus for a broadcast signal, which can high-accurately measure the transmission time of a broadcast signal with a simple measuring apparatus as is in an actual operating state, and a measuring method therefor, and a transmission apparatus and a relay apparatus using the transmission time measuring apparatus, and a delay time measuring apparatus.

According to the present invention the above object is achieved by the transmission time measuring apparatus of claim 1, the transmission apparatus of claim 10, the relay apparatus of claim 11, and the method of claim 9. The dependent claims are directed to different advantageous aspects of the invention.

The invention can be more fully understood from the following detailed description when taken in conjunction with the accompanying drawings, in which:

FIG. 1 is a block diagram showing a structure of a transmission time measuring apparatus according to a first embodiment of the present invention;
FIG. 2 is a block diagram showing a structure of a transmission system for executing a method for measuring the transmission time by the first method which was formerly considered;
FIG. 3 is a view showing a structure of mega-frame initialization packet;
FIG. 4 is a block diagram showing a structure of another transmission system for executing a method for measuring the transmission time by the first method;
FIG. 5 is a block diagram showing a structure of a digital broadcast receiver for executing a method for measuring the transmission time by a second method which was formerly considered;
FIG. 6A is a timing chart showing a structure of an OFDM signal;
FIG. 6B is a timing chart showing a structure of a an OFDM signal;
FIG. 7A is a timing chart showing a structure of a an OFDM signal;
FIG. 7B is a timing chart showing a structure of a an OFDM signal;
FIG. 7C is a timing chart showing a structure of an OFDM signal;
FIG. 8 is a frequency characteristic of an OFDM signal when a multi-pass wave exists;
FIG. 9 is a view showing a delay profile;
FIG. 10 is a block diagram for executing delay profile measurement which was formerly considered;
FIG. 11 is another block diagram for executing delay profile measurement which was formerly considered;
FIG. 12 is a flowchart showing a control procedure in the first embodiment according to the present invention;
FIG. 13 is a view showing OFDM frame structure;
FIG. 14 is a block diagram showing an example of a structure of a comparing OFDM signal generator according to the first embodiment of the present invention;
FIG. 15 is a block diagram showing another example of a structure of a comparing OFDM signal generator according to the first embodiment of the present invention;
FIG. 16 is a block diagram showing a structure of a transmission time measuring apparatus according to a second embodiment of the present invention;
FIG. 17 is a block diagram showing a structure of a transmission time measuring apparatus according to a third embodiment of the present invention;
FIG. 18 is a block diagram showing a structure of a transmission time measuring apparatus according to a fourth embodiment of the present invention;
FIG. 19 is a block diagram showing a structure of a transmission time measuring apparatus according to a fifth embodiment of the present invention;
FIG. 20 is a block diagram showing a structure of a transmission time measuring apparatus according to a sixth embodiment of the present invention;
FIG. 21 is a block diagram showing a structure of a transmission time measuring apparatus according to a seventh embodiment of the present invention;
FIG. 22 is a block diagram showing a structure of a transmission time measuring apparatus according to an eighth embodiment of the present invention;
FIG. 23 is a schematic block diagram showing a structure of a SFN according to a ninth embodiment of the present invention;
FIG. 24 is a block diagram showing a structure of a transmission time measuring apparatus according to a tenth embodiment of the present invention; and
FIG. 25 is a block diagram showing an example of a structure of an OFDM signal processor according to the tenth embodiment of the present invention.

Hereinafter, embodiments of the present invention will be described in detail with reference to the drawings.

(First Embodiment)

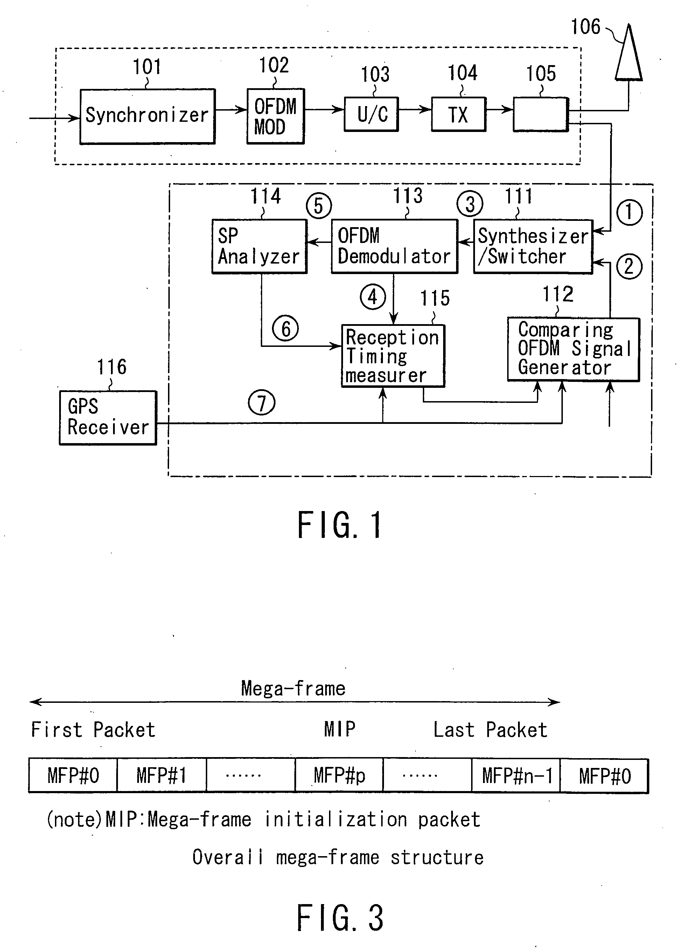

FIG. 1 is a block diagram showing a configuration of a transmission time measuring apparatus according to a first embodiment of the present invention. The transmission time measuring apparatus is installed in a transmitting station.

In FIG. 1, a broadcast TS signal which arrived from a studio is received and detected at a synchronizer 101, and a frame synchronization signal is detected and is inputted to an OFDM modulator 102. The OFDM modulator 102 converts the output of the synchronizer 101 into an OFDM signal. The OFDM signal is frequency-converted from an intermediate frequency (IF) band to a radio frequency (RF) band by an up-converter 103, and is power-amplified at a transmission apparatus 104. Thereafter, the OFDM signal is transmitted from a transmitting antenna 106 via a directional coupler 105 toward a predetermined region. Further, the RF band OFDM signal power-amplified at the transmission apparatus 104 is inputted to a synthesizer/switcher 111 via the directional coupler 105.

Further, in FIG. 1, reference numeral 112 is a comparing OFDM signal generator, and the comparing OFDM signal generator generates a comparing OFDM signal in which at least the mode and the guard interval length thereof are coincident with those of a broadcasting OFDM signal. The comparing OFDM signal is inputted to the synthesizer/switcher 111.

The synthesizer/switcher 111 has a synthesizing mode which synthesizes the broadcasting OFDM signal and the comparing OFDM signal and a switching mode which selectively leads out one of the broadcasting OFDM signal and the comparing OFDM signal. The output of the synthesizer/switcher 111 is demodulated as transmitter parameter signaling (TPS) carriers, continual pilot carriers, scattered pilot cells (SP Cells), information cells, or the like. At this time, symbol synchronization timing and frame synchronization timing (which is written as a frame synchronization word at the top of a TPS carriers) are extracted. Among them, the SP cells are outputted to an SP analyzer 114, and the frame synchronization timing and symbol synchronization timing information are outputted to the reception timing measurer 115.

The SP analyzer 114 generates a frequency characteristic signal by interpolating the SP cells, and determines a delay profile from the frequency characteristic signal, and outputs relative delay time information of both of them at the time of synthesizing from the delay profile.

When the switching mode of the synthesizer/switcher 111 is selected, the reception timing measurer 115 measures a time (t1') which is obtained at a GPS receiver 116 at the time of acquiring symbol synchronization timing of the broadcasting OFDM signal obtained by the OFDM demodulator 113, and a time (t2') which is obtained at the GPS receiver 116 at the time of acquiring symbol synchronization timing of the comparing OFDM signal obtained by the OFDM demodulator 113, and determines a finite difference between the time (t1') and the time (t2'). Then, it is determined whether the finite difference is within a tolerance or not, and when the finite difference is not within the tolerance, the transmission timing of the comparing OFDM signal generator 112 is controlled such that the finite difference is made to be within the tolerance. When the finite difference is within the tolerance, the switching mode of the synthesizer/switcher 111 is set to be the synthesizing mode, and reference time information at the time of transmitting the comparing OFDM signal is added to delay time information which can be obtained at the SP analyzer 114, and the transmission time of the broadcasting OFDM signal is determined.

The GPS receiver 116 generates a reference clock on the basis of a signal transmitted from GPS satellite.

Next, the operation in the above-described configuration will be described.

First, formerly, three methods have been considered in order to measure the transmission time of r the broadcasting OFDM signal.

(First Method)

A first method is a method in which, when transmission timing of respective the transmitting station forming a SFN are already.known, the timing can be controlled in the transmitting station 22 due to information controlling the transmission timing being inserted in and due to the MPEG-2 TS signal being transmitted.

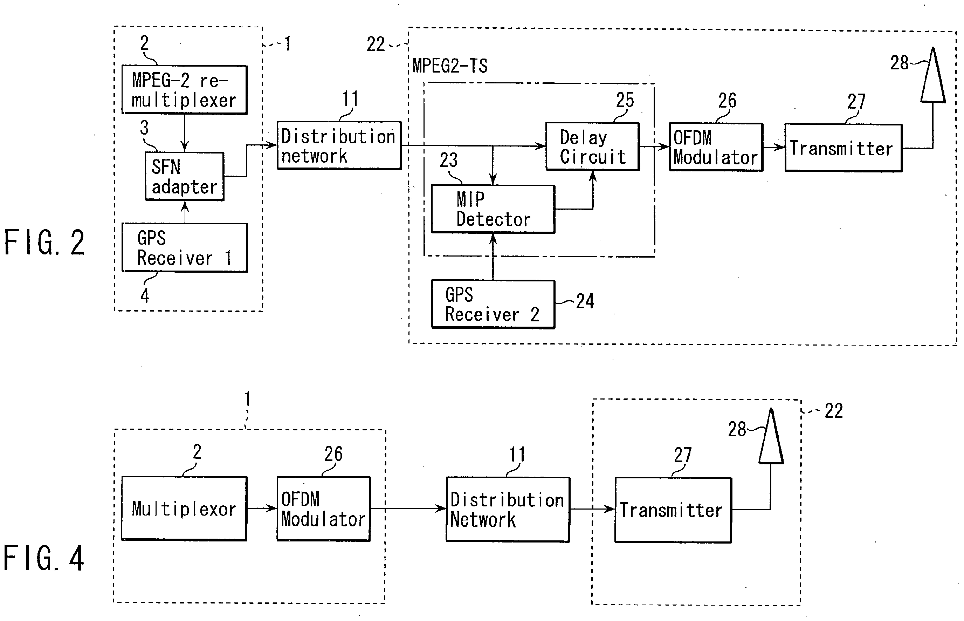

At the studio 1, as shown in FIG. 2, the MPEG-2 TS signal being supplied a MPEG-2 De-multiplexor 2 is formed a mega-frame shown in FIG. 3, and the mega-frame initialization packet (MIP) controlling the transmission timing in the SFN is inserted the mega-frame. A starting point indicating position in mega-frame, and a synchronization time stamp indicating synchronization time or the like are written the MIP. A output signal of the SFN adapter 3 is transmitted the transmitting station 22 via the distribution network 11 (including radio or light transmission path).

In the transmitting station 22, a MIP detector 23 extracts a predetermined MIP from the output signal, and reads out the transmission timing of the transmitting station 22, and compares the transmission timing and the reference time information separately generated from a GPS receiver 24 or the like, and a delay circuit 25 is controlled such that the frame top is transmitted at a predetermined transmission time. The broadcast TS signal in which the timing is controlled at the delay circuit 25 is formed into a broadcasting OFDM signal by a following OFDM modulator 26, and is supplied to a transmitter 27.

Here, signal processing time and transmission delay time of the OFDM modulator 26, the transmitter 27, or the like are measured in advance, and it is necessary to control the transmission time by correcting the measured time. However, when a transmission time is estimated by such a method, for example, when the OFDM modulators 26 manufactured by different manufacturers are mixed in the SFN, it is extremely difficult to strictly manage the aforementioned signal processing delay time. Further, when an repairment of a signal line in the transmitting station or the like is carried out, there is the possibility that the transmission delay time varies, and the problem that an actual transmission time is out of an estimated value.

Moreover, as shown in FIG. 4, when the OFDM modulator 26 is installed at the studio 1, and an OFDM modulated signal is transmitted to the transmitting station 22 by radio and through the distribution network 11, the delay time at the distribution network 11 becomes an amount which cannot be ignored, and it is difficult to maintain the transmission timing in the network to be within a predetermined error at the time of improving/exchanging equipment configuring the wire, or the like.

(Second Method)

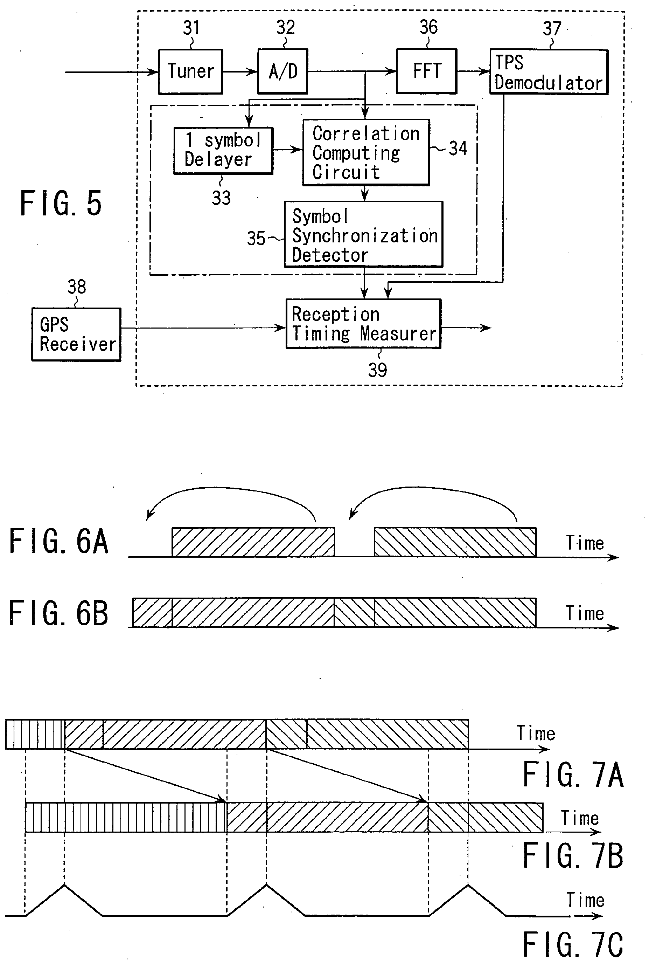

On the other hand, as shown in FIG. 5, a method for estimating the time of a broadcast signal by utilizing a technique of a terrestrial digital broadcast receiver as well can be considered. In FIG. 5, the broadcast signal is converted into a predetermined intermediate frequency band or a base band frequency band at a tuner 31. The intermediate frequency band or the base-band frequency band is converted into a digital signal at an A/D converter 32. Thereafter, the digital signal is OFDM-demodulated at the following FFT processor 36.

A TPS demodulator 37 detects a TPS carrier from the OFDM-demodulated output, and an OFDM frame synchronization word inserted at the top of the TPS carrier is detected.

On the other hand, the output of the A/D converter 32 is supplied to a symbol synchronization detecting section including a 1-symbol delayer 33, a correlation computing circuit 34, and a symbol synchronization detector 35.

With respect to the OFDM signal, as shown in FIG. 6, a signal in which the part of symbol end is added as a guard interval to the front side of the symbol at the OFDM modulator. Accordingly, as shown in FIG. 7, when correlation computing of a received signal and a signal which is delayed one symbol therefrom is carried out, strong correlation appears in a period of the guard interval cycle, and in accordance therewith, the symbol synchronization timing can be detected.

Then, the symbol synchronization detector 35 detects the symbol timing by using the above-described correlation computed output. It is possible to measure the reception timing of the broadcast signal due to the frame synchronization timing and the symbol synchronization timing being compared with a time signal generated at the GPS receiver 38.

However, in the second method, it is difficult to high-accurately measure transmission time due to the following reasons.

Namely, because the demodulator uses narrow band filter and is carrying out temporary memorizing and a digital processing, it is difficult to exactly measure a signal processing delay time in the demodulator. Moreover, because these signal processing time in different designed demodulators are different, it is difficult to use the measuring apparatus as a standard measuring apparatus.

Further, because reception timing depends on the performance of the detecting apparatus, there are a large number of cases in which the reception timing varies due to affects of noise and multi-pass, and it is difficult to stably measure the reception timing. In particular, when a symbol synchronization detection is carried out, the symbol synchronization detection is generally carried out by using correlation computing as described above. However, as shown in FIG. 7C, because a correlation computed output has no steep peak, a timing position is easily offset in accordance with a detection setting level of the correlation computed output. The waveform of the correlation computed output is easily affected by noise and multi-pass, measurement error easily arise.

(Third Method)

On the other hand, a technique in which a delay time of a multi-pass wave is measured by making the best use of the OFDM signal has been made for practical use.

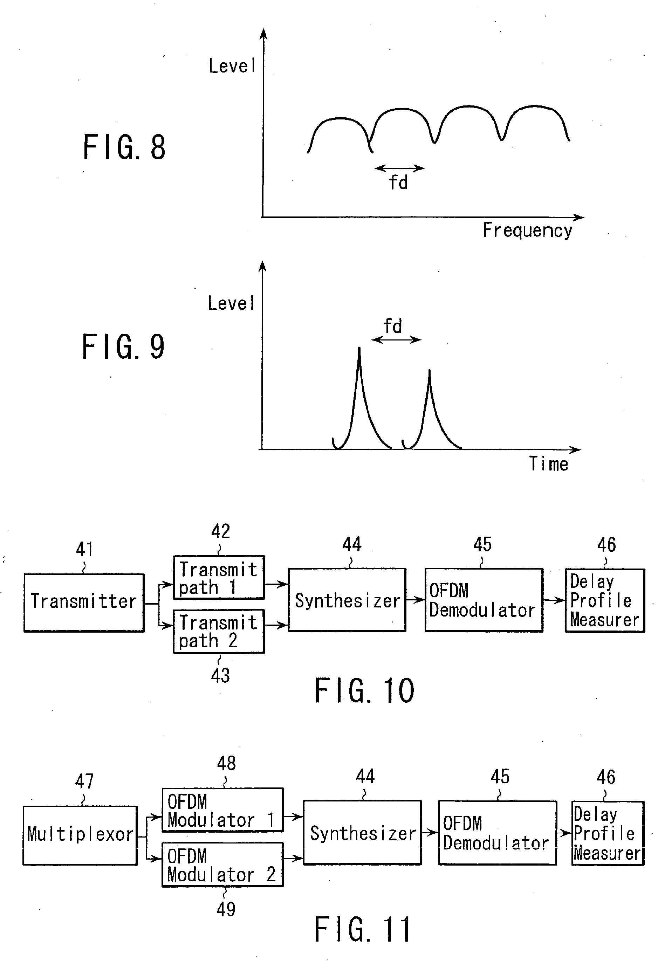

FIG. 8 shows the frequency characteristic of the OFDM signal when a multi-pass wave exists. On the other hand, FIG. 9 shows a delay profile at this time.

A frequency interval fd (Hz) of a dip of the frequency characteristic is an inverse number of a delay time td (seconds) of the multi-pass wave. Such a frequency characteristic is obtained by measuring the SP cells inserted to the OFDM signal. Moreover, the delay profile is obtained by orthogonally converting the above-described frequency characteristic. It has been known that the delay time difference measurement of the direct wave and the multi-pass wave in this case is possible with considerable highly accuracy (theoretically, a measurement resolution which is double of the inverse number of a sampling frequency ft can be obtained. In a case of 8 MHz DVB-T system in Europe, because of ft = 9.14 MHz, the measurement resolution is about 220 ns).

For example, as shown in FIG. 10, it is possible to measure a delay time difference between deference paths. Further, if the signal processing delay time of the OFDM demodulator 48 and the OFDM modulator 49 are within a predetermined range, it is possible to measure a relative processing delay time difference of individual OFDM modulators by a measurement system such as shown in FIG. 11.

The third method is efficient when a delay time difference of a plurality of transmitting apparatuses, for example, at a factory. It is necessary to exactly know a propagation delay from the transmitting station to a point of measurement in order to measure the relative delay time between the transmitters installed at different places. However, there are a large number of multi-passes in terrestrial, and because the characteristic thereof varies in accordance with environmental conditions, it is difficult to exactly know the propagation profile from the transmitting station to the point of measurement. Further, because radio wave serving as a reference is required, it is necessary to select a place where radio wave can be received at both of the reference station and the station which is to be measured, and troublesome work such as a preliminary survey for measurement or the like is required. From such a standpoint, the third method is unsuitable for the apparatus for measuring the transmission time of the respective transmitting stations.

(Operation in first embodiment)

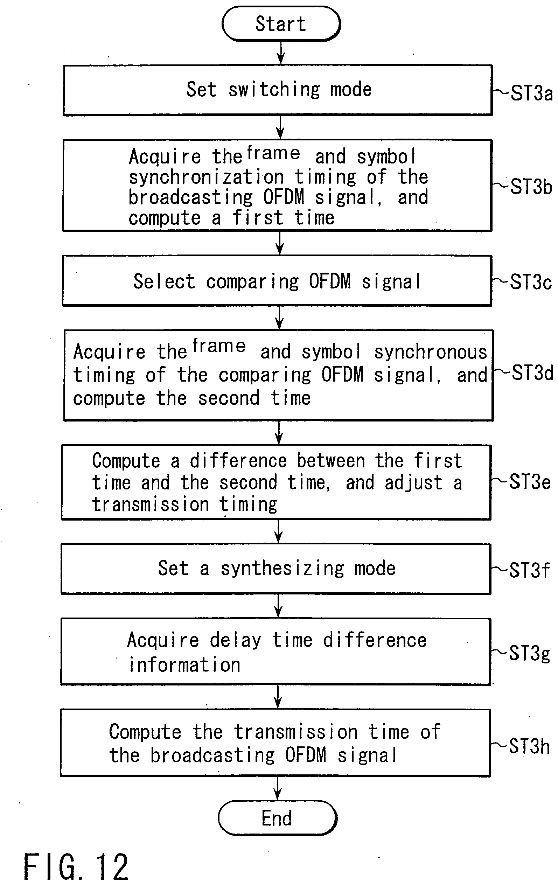

Then, in the first embodiment, in order to solve the problems in the first to third methods, the following control processings are executed. FIG. 12 is a flowchart showing a control procedure of the reception timing measurer 115.

When the control processing is started, the reception timing measurer 115 sets the synthesizer/switcher 111 to the switching mode (step ST3a), and makes the synthesizer/switcher 111 select the broadcasting OFDM signal. Next, the reception timing measurer 115 acquires the frame and symbol synchronization timing of the broadcasting OFDM signal from the output of the OFDM demodulator 113, and determines the time (t1') obtained at the GPS receiver 116 at the time of acquiring the symbol synchronization timing (step ST3b).

Further, the reception timing measurer 115 makes the synthesizer/switcher 111 select the comparing OFDM signal (step ST3c), and acquires frame and symbol synchronization timing of the comparing OFDM signal from the output of the OFDM demodulator 113, and determines the time (t2') obtained at the GPS receiver 116 at the time of acquiring the symbol synchronization timing (step ST3d).

Next, the reception timing measurer 115 determines a difference between the time (t1') and the time (t2'), and adjusts a transmission timing of the comparing OFDM signal generator 112 such that the difference is made to be within a predetermined error range (step ST3e). Thereafter, the reception timing measurer 115 sets the synthesizer/switcher 111 to the synthesizing mode (step ST3f).

Next, the reception timing measurer 115 acquires the delay time difference information from the SP analyzer 114 (step ST3g), and determines the transmission time of the broadcasting OFDM signal by subtracting the delay time difference information from the comparing OFDM signal generating timing information obtained at step ST3e (step ST3h).

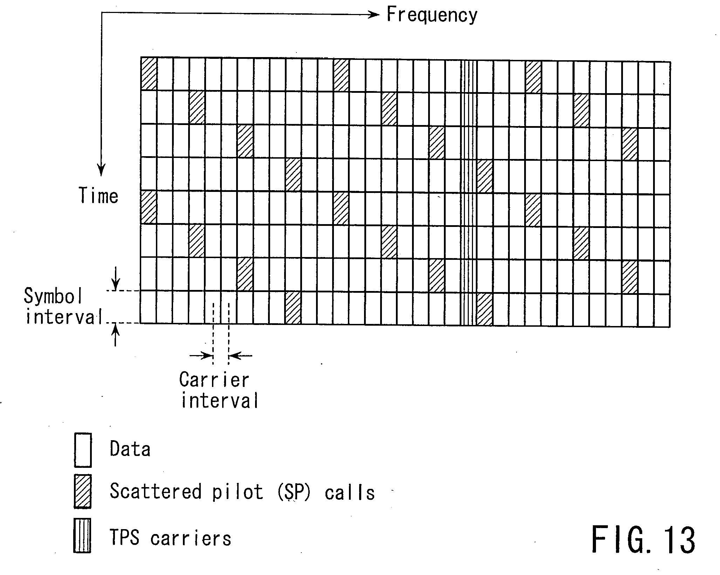

Here, because the modes and the guard interval lengths of the broadcasting OFDM signal and the comparing OFDM signal are coincide, the carrier interval and the symbol intervals are coincident. Accordingly, although the broadcasting OFDM signal and the comparing OFDM signal are different signals, they have signal structures in which at least the frame synchronization word portions among CP carriers, SP cells, and TPS carriers in the OFDM frame structure shown in FIG. 13 are coincident. Note that the frame synchronization word is constant regardless of a transmission parameter of the OFDM signal.

Further, because the SP cells of the broadcasting OFDM signal and the comparing OFDM signal are coincident, the SP cells outputted from the OFDM demodulator 113 provides a frequency characteristic in a state in which the broadcasting OFDM signal serves as the direct wave and the comparing OFDM signal is the multi-pass wave. Accordingly, the output of the SP analyzer 114 provides relative delay time difference information td between the broadcasting OFDM signal and the comparing OFDM signal.

The reception timing measurer 115 provides the transmission time of the broadcasting OFDM signal which is a value (t1-td) in which the aforementioned relative delay time difference td is subtracted from the transmission time t1 of the comparing OFDM signal generated from the comparing OFDM signal generator 112. Note that there is no need for the RF frequency and the sampling clock of the comparing OFDM signal to be coincident with those of the broadcasting OFDM signal. However, it is necessary to make the RF frequency and the sampling clock of the comparing OFDM signal to be within an error range of at least a range which does not affect on the measurement. It can be known that a measurement accuracy of the transmission time depends on the measurement accuracy of the delay time difference td between the broadcasting OFDM signal and the comparing OFDM signal, in the embodiment of the present invention described above.

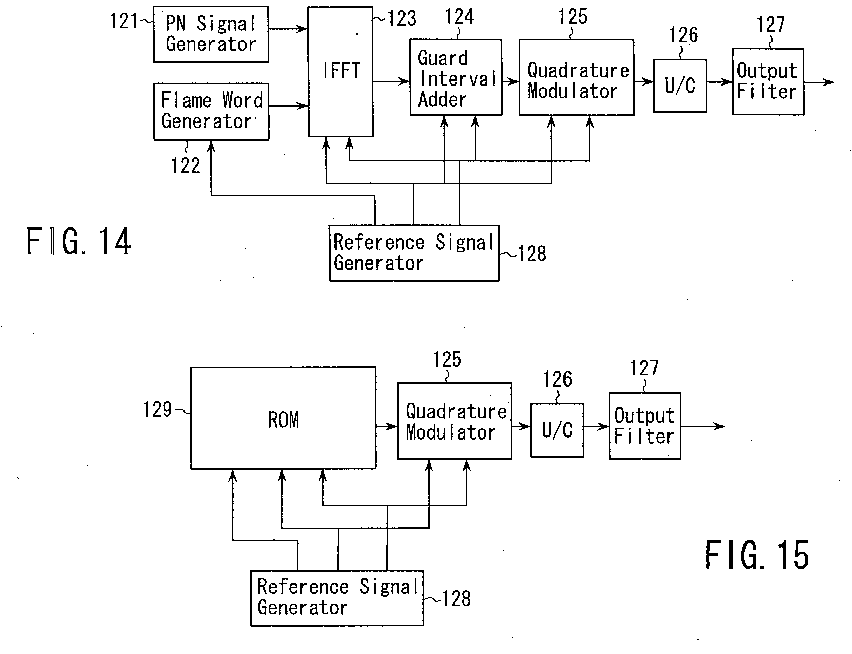

One example of the configuration of the comparing OFDM signal generator 112 is shown in FIG. 14.

An inverse Fourier transform (IFFT: Inverse Fast Fourier transform) section 123 is a circuit generating OFDM signal, and the OFDM signal are transmitted in units of symbols in accordance with the symbol timing signal from a reference signal generator 128.

Further, the frame timing signal is generated from the reference signal generator 128, and controls synchronization word multiple positions in a TPS carrier in the OFDM signal and the multiple positions of various types of pilot signals. A PN signal generator 121 generates a PN signal for modulating a information symbol portion by the PN signal.

Because the information symbol portion is not used for the transmission time measurement, the information symbol portion can be modulated by an arbitrary data. However, the operation of the receiver can be made stable by modulating information symbol portion and dispersing the spectrum. After a guard interval is added to the output of the IFFT section 123 at a following guard interval adder 124, the output of the IFFT section 123 is applied to an quadrature modulator 125.

The output of the guard interval adder 124 is the same as that in FIG. 6B. The transmission timing of (symbol + guard) signal at this time is controlled by the symbol timing signal. The output of the quadrature modulator 125 is outputted as a comparing OFDM signal via an up-converter 126 and an output filter 127.

As known from the above description of the operation, because the output timing of the output of the quadrature modulator 125 and the previous output are controlled by various types of timing signals supplied from a reference signal generator 128, the transmission time can be controlled at a setting accuracy (which can be usually set by the resolution of the sampling frequency fs) of the various types of timing signals. On the other hand, it is possible to measure the signal processing delay time of the up-converter 126 and the output filter 127 in advance by a general-purpose measuring apparatus such as a network analyzer or the like.

Accordingly, if the comparing OFDM signal generator 112 carries out management for the transmission time due to the signal processing delay time of the up-converter 126 and the output filter 127 measured in advance being subtracted, high accurate transmission time setting can be carried out. In this way, the transmission time of the comparing OFDM signal generator 112 can be high-accurately set.

On the other hand, a measurement accuracy of the delay time difference td between the broadcasting OFDM signal and the comparing OFDM signal can be achieved so as to be about 250 ns as described above. Accordingly, by using the measuring (determining) apparatus of the present invention, it is possible to measure the transmission time at accuracy of several 100 ns.

Note that, in the above description, the method in which the comparing OFDM signal is generated by using the IFFT section 123. However, for example, as shown in FIG. 15, it is possible to generate a signal having the OFDM frame structure and a guard interval by using a read only memory (ROM) 129. An OFDM signal corresponding to the mode and the guard interval length used for the terrestrial digital broadcast is written into the ROM 129 in advance, and it suffices that a corresponding signal is read from information of the broadcast signal or the like.

In accordance therewith, there is no need to generate the comparing OFDM signal every time of measuring, and it is possible generate the comparing OFDM signal with a simple procedure.

As described above, in the first embodiment, the comparing OFDM signal whose mode and interval length are coincident with that of the broadcasting OFDM signal is generated at the comparing OFDM signal generator 112, and the comparing ODM signal and the broadcasting OFDM signal are selected and led out at the synthesizer/switcher 111, and are demodulated at the OFDM demodulator 113, and the difference between the first reference time information at the time of acquiring the symbol synchronization timing of the broadcasting OFDM signal and the second reference time information at the time of acquiring the symbol synchronization timing of the comparing OFDM signal is measured at the reception timing measurer 115. Further, it is determined whether the time difference is within the tolerance or not, and when the time difference is out of the tolerance, the transmission timing of the comparing OFDM signal generator 112 is controlled such that the time difference is made to be within the tolerance.

Accordingly, the comparing OFDM signal can be generated without a special measuring apparatus being used, and the transmission time of the broadcasting OFDM signal can be easily measured by only acquiring the respective symbol synchronization timing of the broadcasting OFDM signal and the comparing OFDM signal, and reliability on measurement can be further improved.

Further, in the first embodiment, focusing on the SP cells, the broadcasting OFDM signal and the comparing OFDM signal are synthesized at the synthesizer/switcher 111, and are demodulated at the OFDM demodulator 113, and a SP cells having a symbol cycle is extracted. A relative delay time at the time of synthesizing can be determined from the frequency characteristic of the SP cells having the symbol cycle at the SP analyzer 114. In accordance therewith, when the time difference between the broadcasting OFDM signal and the comparing OFDM signal is within a predetermined error range, the transmission time of the broadcasting OFDM signal can be easily and high-accurately measured without a special measuring apparatus or the like being used by only determining the relative delay time at the time of synthesizing of the broadcasting OFDM signal and the comparing OFDM signal in accordance with the amplitude characteristic/ phase frequency characteristic of SP cells due to the SP cells being used.

Accordingly, because there is no affect on the measurement accuracy of the OFDM demodulator 113, deterioration of the measurement accuracy described as the problem of the second method does not affect on the first embodiment at all. Also, because it is possible to individually measure the transmission time of an individual transmitting station, there is no need to select a point of measurement in advance at the time of measuring as described above, there is no case in which a measurement place is not limited. Moreover, as known from the above description, because it is possible to measure at the transmitter output end, there is no need to depend on a method for the signal transmission from a studio to a transmitting station.

Further, the problem that it is difficult to apply to the signal transmission method pointed out in the above-described first method does not arise in the first embodiment.

(Second Embodiment)

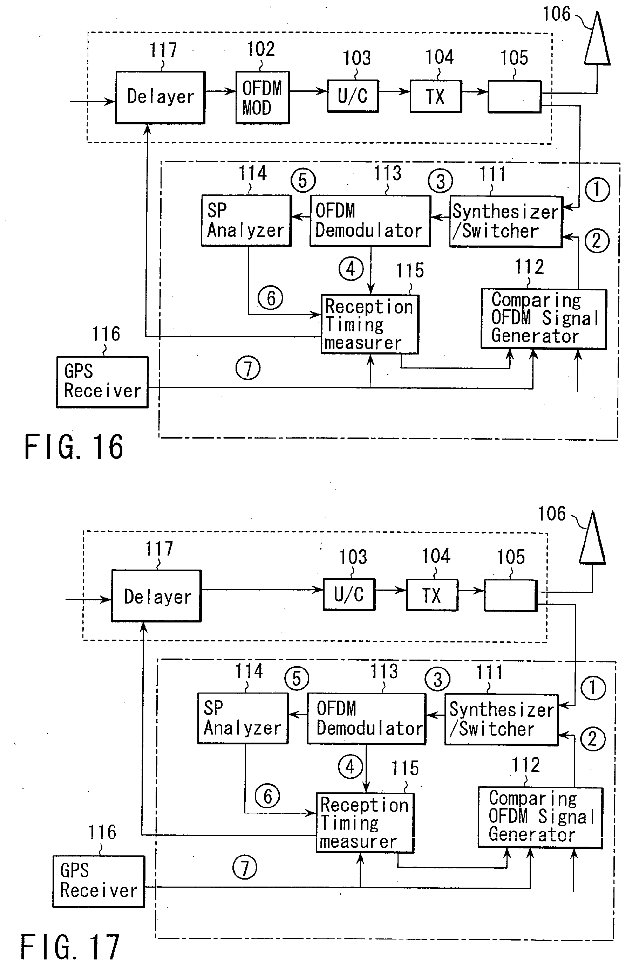

FIG. 16 is a block diagram showing an application example of a transmission time measuring apparatus according to a second embodiment of the present invention. Note that, in FIG. 16, same portion which are the same as those of FIG. 1 are denoted by the same reference numerals, and detailed description thereof is omitted.

Namely, in the second embodiment, the delay unit 117 delaying the broadcast TS signal is provided at the previous step of the OFDM modulator 102. Further, the reception timing measurer 115 transmits the measured transmission time information of the broadcasting OFDM signal to the delayer 117. The delayer 117 controls a delay time on the basis of the transmission time information provided from the reception timing measurer 115.

Accordingly, in accordance with the second embodiment, because the transmission time information of the broadcasting OFDM signal measured by the reception timing measurer 115 is transmitted to the delayer 117, and the delay time is controlled so as to be coincident with the designated transmission time, there is no need to detect the MIP defined as the above-described ETSI TS101·191, and the SFN can be structured with a simple system.

(Third Embodiment)

FIG. 17 is a block diagram showing an application example of a transmission time measuring apparatus according to a third embodiment of the present invention. Note that, in FIG. 17, same portions which are the same as those of FIG. 16 are denoted by the same reference numerals, and detailed description thereof is omitted.

Namely, in the third embodiment, when an IF transmission is carried out between the studio and the transmitting station for studio to transmitter link(STL), the delayer 117 delaying IF signal is provided at the previous step of the up-converter 103 of the transmitting station.

A unit operating in an intermediate frequency band is used as the delayer 117. The reception timing measurer 115 transmits the measured transmission time information of the broadcasting OFDM signal to the delayer 117. The delayer 117 controls a delay time on the basis of the transmission time information provided from the reception timing measurer 115.

Accordingly, in accordance with the third embodiment, the effect which is the same as that of the second embodiment can be obtained. Further, a method corresponding to the IF transmitting method can be applied as is to the transmission time control of the broadcast wave relay station(called translator) in which system the relay station retransmit the broadcast wave which are transmitted from key station. Moreover, because the transmission time of the transmitting output end can be measured by the same measuring method regardless of the method for transmitting between the studio and the transmitting station, measurement control of the network with the same data format is possible regardless of the systems of the respective transmitting stations forming the SFN, and when the network is structured, an appropriate system transmitting station corresponding to the situation can be selected. Further, because measurement method is the same regardless of the system of the transmitting station, the data management is extremely easy.

(Fourth Embodiment)

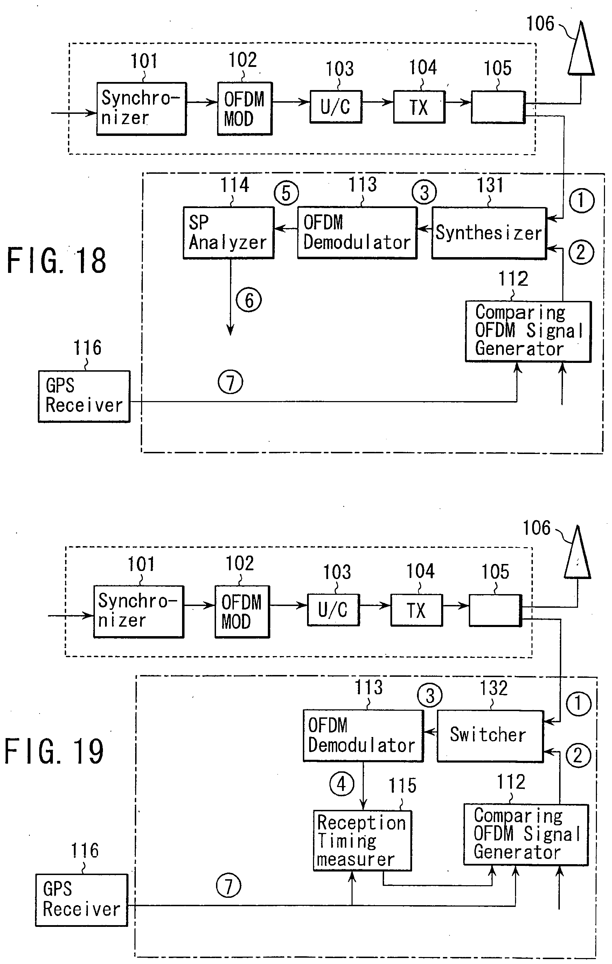

FIG. 18 is a block diagram showing a transmission time measuring apparatus according to a fourth embodiment of the present invention. Note that, in FIG. 18, same portions which are the same as those of FIG. 1 are denoted by the same reference numerals, and detailed description thereof is omitted.

Namely, the fourth embodiment is an embodiment in a case where a transmission timing of the broadcasting OFDM signal is already-known to some extent, and a transmission timing of the comparing OFDM signal can be set to be within a predetermined error range in advance, and the fourth embodiment is simplified as compared with FIG. 1.

When the transmission timing of the comparing OFDM signal is within the predetermined error range in advance, it suffices that the synthesizer/switcher 111 only operates as a synthesizer 131. Further, because there is no need to control the transmission timing of the OFDM signal generator 112 in accordance with the measured results, the reception timing measurer 115 is unnecessary, a time in which the relative delay time difference information td outputted from the SP analyzer 114 is added to the transmission time t1 of the comparing OFDM signal designated in advance is the transmission time of the broadcasting OFDM signal. Note that, because a measurement accuracy in this case is determined by a measurement accuracy of the relative delay time difference at the SP analyzer 114, the measurement accuracy is the same extent as that of the first embodiment.

(Fifth Embodiment)

FIG. 19 is a block diagram showing a transmission time measuring apparatus according to a fifth embodiment of the present invention. Note that, in FIG. 19, same portions which are the same as those of FIG. 1 are denoted by the same reference numerals, and detailed description thereof is omitted.

Namely, the fifth embodiment is an embodiment in a case where the transmission time measurement accuracy of the broadcasting OFDM signal is not required. In this case, measurement of the relative delay time difference by the SP analyzer 114 can be omitted. Accordingly, the SP analyzer 114 is unnecessary, and the synthesizer/switcher 111 is replaced with a switcher 132.

Therefore, in accordance with the fifth embodiment, an effect which is the same as that of the above-described fourth embodiment can be obtained. Further, as the conventional second method, because there is no affect by signal processing delay of the tuner 31 of the OFDM demodulator, the A/D converter 32, the symbol synchronization detecting section, or the like, it is possible to sufficiently and high-accurately measure as compared with the second method.

(Sixth Embodiment)

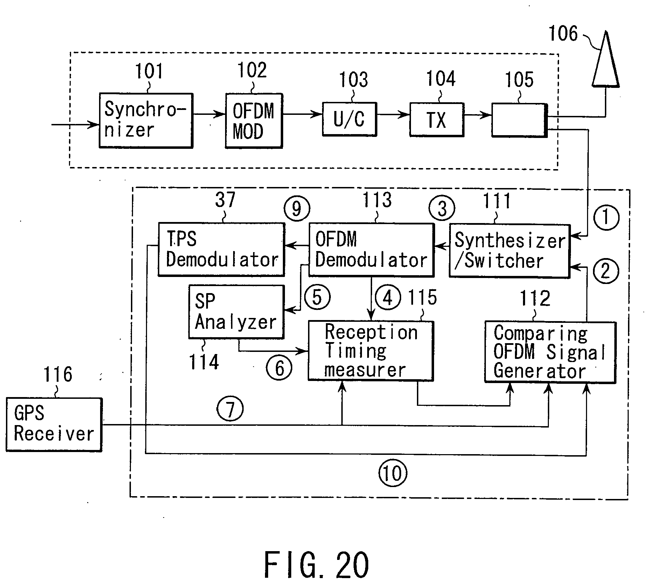

FIG. 20 is a block diagram showing a transmission time measuring apparatus according to a sixth embodiment of the present invention. Note that, in FIG. 20, same portions which are the same as those of FIG. 1 are denoted by the same reference numerals, and detailed description thereof is omitted.

Namely, in the sixth embodiment, a TPS demodulator 137 is provided at the following stage of the OFDM demodulator 113. When the synthesizer/switcher 111 selects the broadcasting OFDM signal, the TPS demodulator 137 demodulates a TPS carriers from the output of the OFDM demodulator 113, and outputs modulation parameter information included in the TPS carriers to the comparing OFDM signal generator 112. Then, the comparing OFDM signal generator 112 generates the comparing OFDM signal based on the modulation parameter information.

As described above, in accordance with the sixth embodiment, because the comparing OFDM signal is generated by using the TPS carriers of the broadcasting OFDM signal, the comparing OFDM signal which is substantially consistent with the broadcasting OFDM signal can be automatically and continuously generated without carrying out parameter setting of the comparing OFDM signal generator 112 by manual setting.

(Seventh Embodiment)

In a seventh embodiment of the present invention, a delay time of a transmission system is measured by using the transmission time measuring apparatus according to the first to sixth embodiments.

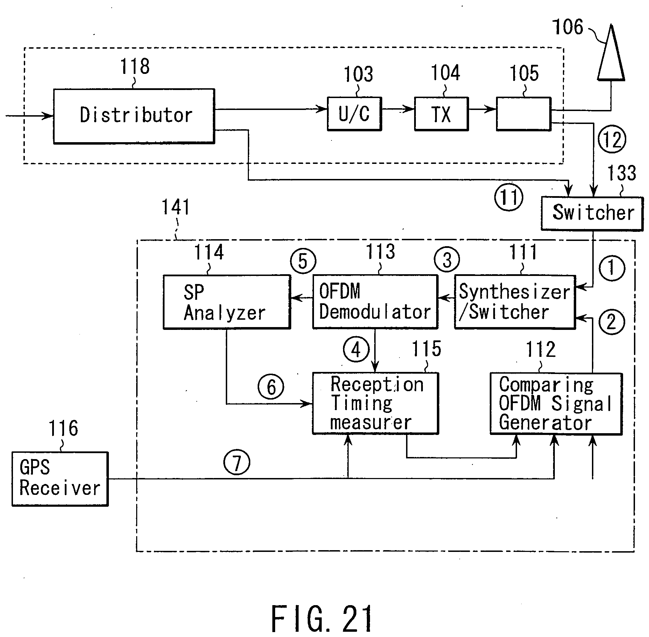

FIG. 21 is a block diagram showing an application example of the transmission time measuring apparatus according to the seventh embodiment of the present invention. Note that, in FIG. 21, same portions which are the same as those of FIG. 1 are denoted by the same reference numerals, and detailed description thereof is omitted.

Namely, the seventh embodiment is an embodiment in which measurement of a delay time from inputting to outputting of the transmitting station of the IF transmitting method is carried out. A switcher 133 installed at the input terminal of the transmission time measuring apparatus 141 of the invention switches inputting and outputting of the transmitting station.

First, an output signal of a distributor 118 is selected by the switcher 133, and the transmission time of the output signal of the distributor 118 is measured by the transmission time measuring apparatus 141, and the measured result is supposed to be t1. Next, an output signal of the directional coupler 105 is selected by the switcher 133, and the transmission time of the output signal of the directional coupler 105 is measured by the transmission time measuring apparatus 141, and the measured result is supposed to be t2.

Then, the transmission time measuring apparatus 141 can determine a delay time td required for the processing in the transmitting station by subtracting the measured result t2 from the measured result t1. Namely, the transmission time measuring apparatus 141 can be used as a measuring apparatus for the delay time.

Note that, in the seventh embodiment, the switcher 133 is used. However, the same effect can be obtained by adding switching functions due to input terminals of the synthesizer/switcher 111 which is a component of the transmission time measuring apparatus 141 of the present invention being increased.

(Eighth Embodiment)

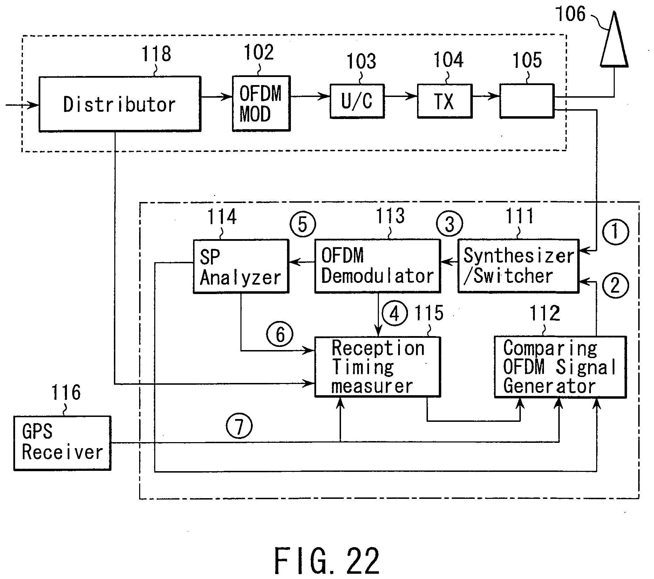

FIG. 22 is a block diagram showing an application example of a transmission time measuring apparatus according to an eighth embodiment of the present invention. Note that, in FIG. 22, same portions which are the same as those of FIG. 1 are denoted by the same reference numerals, and detailed description thereof is omitted.

Namely, in the eighth embodiment, a frame top flag inserted in the TS signal is detected by the synchronizer 101. The detected frame top flag is transmitted as an OFDM frame timing signal of the inputted TS signal to the reception timing measurer 115 in the transmission time measuring apparatus 141. At the reception timing measurer 115, the delay time td at the transmitting station can be determined by subtracting the time t2 of the OFDM frame timing from the measured transmission time t1 of the output of the directional coupler 105. In this case, the delay time including apparatuses such as the OFDM modulator 102 included in the transmission system to be measured, and the like, are measured.

Note that the seventh and eighth embodiments are the examples in which delay time measurement in the same transmitting station is carried out. However, it is necessary to grasp a total delay amount including the transmission system such as the STL or the like in order to realize the SFN.

(Ninth Embodiment)

In a ninth embodiment of the present invention, a total delay of a transmission apparatus and a transmitting station which form the SFN is measured.

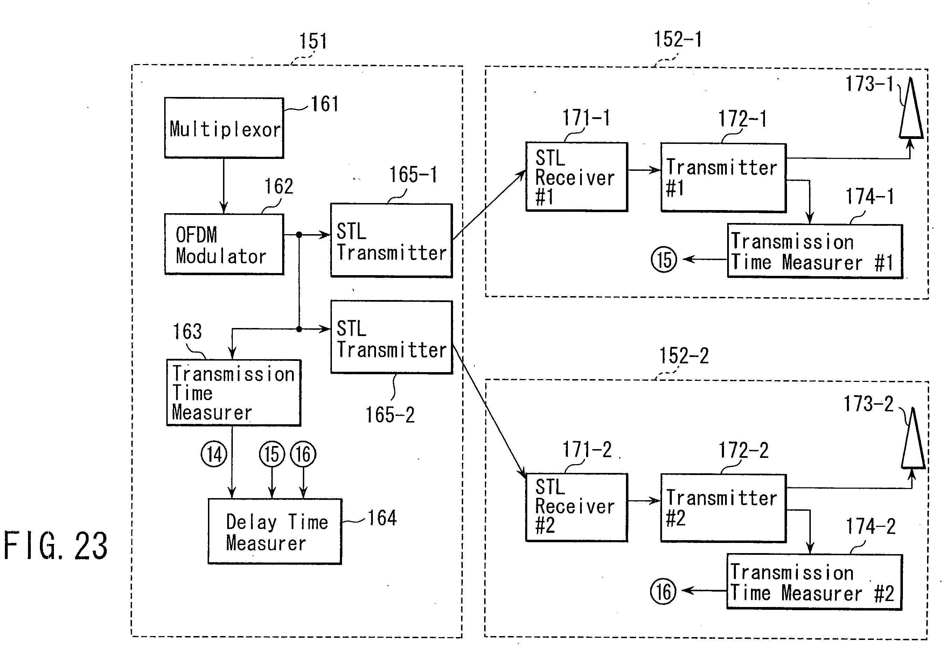

FIG. 23 is a schematic block diagram of the SFN according to the ninth embodiment of the present invention.

The detailed structures of transmission time measuring apparatuses 163, 174-1, and 174-2 in FIG. 23 are the same as the transmission time measuring apparatus shown in FIG. 1. At a studio 151, a broadcast TS signal is generated at a multiplexor 161, and is transmitted to an OFDM modulator 162. The OFDM modulator 162 receives the TS signal and generates an OFDM broadcast signal.

The transmission time measuring apparatus 163 installed in the studio 151 detects OFDM frame timing of the output of the OFDM modulator 162, and measures the time at the time of detecting as the transmission time t0. The measured transmission time information is supplied to a delay time measuring apparatus 164.

On the other hand, the output of the OFDM modulator 162 is respectively transmitted to transmitting stations 152-1 and 152-2 via STL transmission apparatuses 165-1 and 165-2. The transmission time measuring apparatus 174-1 installed in the transmitting station (#1) 152-1 determines the transmission time t1 of the output of the transmission apparatus 172-1, and transmits the measured data to the delay time measuring apparatus 164 in the studio 151. Further, the transmission time measuring apparatus 174-2 installed in the transmitting station (#2) 152-2 determines the transmission time t2 of the output of the transmission apparatus 172-2, and transmits the measured data to the delay time measuring apparatus 164 in the studio 151.

The delay time measuring apparatus 164 is a mere computing circuit, and computes the total delay amounts td1 and td2 from the respective transmission time data by using the following expression. Note that td1 is a total delay amount from the output of the OFDM modulator 162 in the studio 151 to the output of the transmission apparatus 172-1 in the transmitting station 152-1. On the other hand, in the same way, td2 is a total delay amount from the output of the OFDM modulator 162 to the output of the transmission apparatus 172-2 in the transmitting station 152-2.

$$td1 = t1 - t0$$

$$td2 = t2 - t0$$

In the ninth embodiment, the case in which a radio STL is the IF transmitting method is shown as the example. However, the OFDM modulator is installed in a transmitting station, and the synchronizer 101 is used in place of the transmission time measuring apparatus 163 in a case of the TS transmitting method in which TS signal is transmitted through the STL circuit, and the frame heading flag in the TS signal is detected, and due to time data thereof being supplied as the transmission time t0 to the delay time measuring apparatus 164, the total delay amount including the STL apparatus and the circuit can be measured in the same way as in the case of the IF transmitting method. Note that, when a multiplexor outputs the frame heading flag, due to the timing thereof being used as t0, the synchronizer 101 can be omitted.

(Tenth Embodiment)

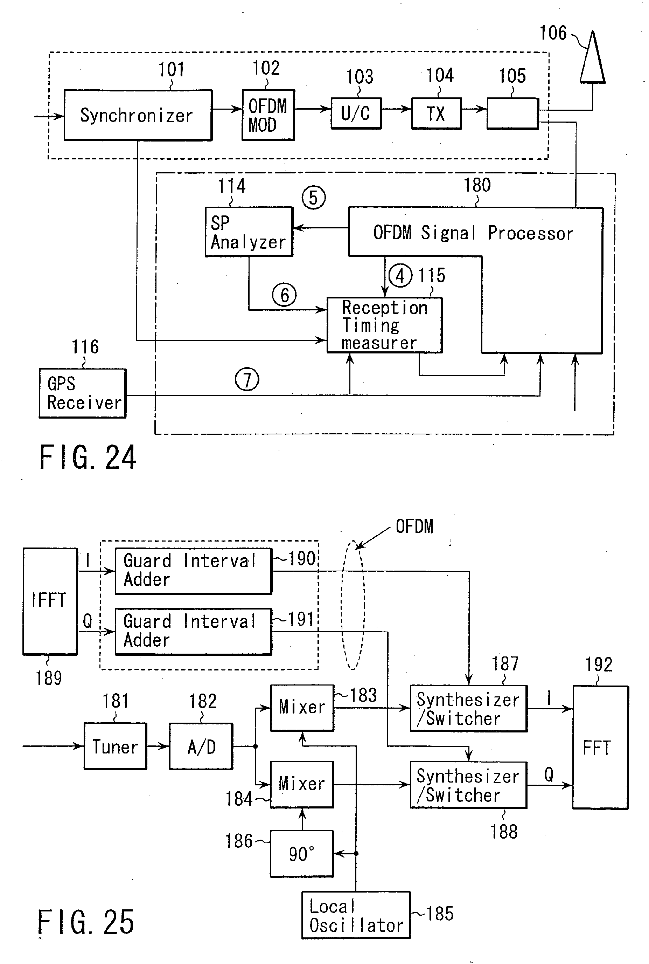

FIG. 24 is a block diagram showing an application example of a transmission time measuring apparatus according to a tenth embodiment of the present invention. Note that, in FIG. 24, same portions which are the same as those of FIG. 1 are denoted by the same reference numerals, and detailed description thereof is omitted.

Namely, in the tenth embodiment, the synthesizer/ switcher 111, the comparing OFDM signal generator 112, and the OFDM demodulator 113 are integrated in an OFDM signal processing section 180.

As shown in FIG. 25, the OFDM signal processing section 180 has a tuner 181, an A/D converter 182, mixers 183 and 184, a local oscillator 185, an quadrature converter 186, synthesizer/switcher 187 and 188, an IFFT section 189, guard interval adder 190 and 191, and an FFT section 192.

The broadcasting OFDM signal is converted into a digital signal by the tuner 181 and the A/D converter 182. Thereafter, the digital signal is supplied to the mixers 183 and 184.

A signaling frequency generated from the local oscillator 185 is supplied to the mixer 183 and the quadrature converter 186. The quadrature converter 186 phase-shifts the inputted signaling frequency 90° and outputs it to the mixer 184. The mixer 183 multiplies the output of the A/D converter 182 and the signaling frequency. The mixer 184 multiplies the output of the A/D converter 182 and the output of the quadrature converter 186. The computed results which can be obtained at the mixers 183 and 184 are respectively supplied to the synthesizer/switcher 187 and 188.

On the other hand, the IFFT section 189 orthogonal-converts the comparing OFDM signal into an I signal and a Q signal. Guard interval is added to these I signal and Q signal at the guard interval adder 190 and 191, respectively, and then the I signal and Q signal are supplied to the synthesizer/switcher 187 and 188.

The synthesizer/switcher 187 switches or synthesizes an I signal of the broadcasting OFDM signal and an I signal of the comparing OFDM signal, and outputs the I signal which is the output thereof to the FFT section 192. The synthesizer/switcher 188 switches or synthesizes a Q signal of the broadcasting OFDM signal and a Q signal of the comparing OFDM signal, and outputs the Q signal which is the output thereof to the FFT section 192. The FFT section 192 respectively converts the inputted I signal and Q signal from time domain signals into frequency domain signals.

In this way, in accordance with the tenth embodiment, an attempt can be made to make the entire apparatus compact and at a low cost.

(Other Embodiments)

The present invention is not limited to the above-described embodiments. In the first embodiment, when the synthesizing mode is executed, because the broadcasting OFDM signal is demodulated as the direct wave, a level of the comparing OFDM signal is set to less than or equal to a predetermined level difference. On the contrary, the demodulator can be operated with the comparing OFDM signal serving as the direct wave. In this case, it suffices that the level of the broadcasting OFDM signal is made less than or equal to a predetermined level as compared with the comparing OFDM signal, and the OFDM demodulator is operated. In this case, because the reference signal of the relative delay time difference td is the comparing OFDM signal, the transmission time of the broadcast signal can be determined by (t1 + td).

In the second embodiment, the example in which the delay unit is provided at the front stage of the OFDM modulator has been described. However, there is no need to limit thereto, and the delay unit may be provided at the following stage of the OFDM modulator.

In the third embodiment, the example in which the delay unit is provided at the front stage of the up-converter has been described. However, there is no need to limit thereto, and the delay unit may be provided at the following stage of the up-converter or the transmission apparatus.

In the respective embodiments, the example in which the reference time information is generated by receiving a signal from the GPS satellite has been described. There is no need to limit thereto, and a system other than the GPS may be used.

Further, in the seventh and eighth embodiments, the example in which the transmission delay time is measured by using the input signal and output signal of the transmitting station has been described. However, provided that the transmission time of one of the input signal and the output signal is already known, due to a difference between the already-known transmission time and the transmission time obtained by measurement being determined, the transmission delay time can be easily measured without being affected by the time of arising of system failure in the transmitting station, or the like. Moreover, in the ninth embodiment as well, the delay time is measured in advance, and due to a difference between the already-known delay time and the delay time between the transmitting stations which has been actually measured being determined, it can be verified that the system normally operates when the difference is within the tolerance, and in accordance therewith, reliability on measurement can be improved.

Moreover, the present invention can be embodied for not only the terrestrial digital broadcast, but also a system using broadcast wave coming from a satellite.

In addition, with respect to the system configuration, configurations of the studio and transmitting stations, a configuration of the relay station, a configuration of the transmission time measuring apparatus, a method for measuring transmission time, a method for measuring transmission delay time, or the like, various modifications can be embodied within a range which does not deviate from the scope of the appended claims.

**Claims**

1. A transmission time measuring apparatus for a broadcast signal, in which a pilot signal having already-known amplitude and phase characteristics is repeatedly inserted at a given symbol cycle, and which receives a digital broadcast signal whose mode and guard interval length are specified by an OFDM, Orthogonal Frequency Division Multiplex, transmission format, and which measures the transmission time of the received digital broadcast signal, the transmission time measuring apparatus comprising:

   generating means (112) for generating a comparing OFDM signal whose mode and guard interval length are coincident with those of the received digital broadcast signal;
   time information acquiring means (116) for acquiring reference time information at the time of transmitting the comparing OFDM signal;
   time difference computing means (111,113,114,115) for determining an incoming delay time difference between the received digital broadcast signal and the comparing OFDM signal by referring to the comparing OFDM signal; and
   time computing means (115) for determining the transmission time of the digital broadcast signal by adding the reference time information to the incoming delay time difference.

2. The transmission time measuring apparatus for a broadcast signal according to claim 1, wherein the time difference computing means comprises:

synthesizing means (111) for synthesizing the received digital broadcast signal and the comparing OFDM signal to output a synthesized signal;

demodulating means (113) for demodulating the synthesized signal to output a demodulated signal; and

computing means (114,115) for extracting the pilot signal from the demodulated signal, and for determining an incoming delay time difference between the received digital broadcast signal and the comparing OFDM signal from the pilot signal.

3. A transmission time measuring apparatus for a broadcast signal according to claim 1, wherein the time difference computing means comprises:

selecting means (111) for selectively leading out any one of the received digital broadcast signal and the comparing OFDM signal to output a selected signal;

demodulating means (113) for demodulating the selected signal to output a demodulated signal;

timing acquiring means (115) for acquiring symbol synchronization timing of the received digital broadcast signal and symbol synchronization timing of the comparing OFDM signal from the demodulated signal;

computing means (115) for acquiring first reference time information at the time of acquiring the symbol synchronization timing of the received digital broadcast signal and second reference time information at the time of acquiring the symbol synchronization timing of the comparing OFDM signal, and for determining a time difference between the first and second reference time information; and

control means (115) for determining whether or not the time difference is within a tolerance, and when the time difference is out of the tolerance, for controlling generation timing of the comparing signal generating means such that the time difference is made to be within the tolerance, and

the time computing means (115) determines the transmission time of the digital broadcast signal by adding the time difference within the tolerance to the second reference time information.

4. The transmission time measuring apparatus for a broadcast signal according to claim 1, wherein the time difference computing means comprises:

processing means (111) having a synthesizing mode synthesizing the received digital broadcast signal and the comparing OFDM signal to output a processed signal, and a switching mode selectively leading out any one of the received digital broadcast signal and the comparing OFDM signal to output the processed signal;

demodulating means (113) for demodulating the processed signal to output a demodulated signal;

timing acquiring means (115) for acquiring symbol synchronization timing of the received digital broadcast signal and symbol synchronization timing of the comparing OFDM signal from the demodulated signal at the time of designating the switching mode;

first computing means (115) for acquiring first reference time information at the time of acquiring the symbol synchronization timing of the received digital broadcast signal and second reference time information at the time of acquiring the symbol synchronization timing of the comparing OFDM signal, and for determining a time difference between the first and the second reference time information;

control means (115) for determining whether or not the time difference is within a tolerance, and when the time difference is out of the tolerance, for controlling generation timing of the generating means (112) such that the time difference is made to be within the tolerance, and thereafter, when the difference is made to be within the tolerance, for making the processing means (111) execute the synthesizing mode; and

second computing means (114,115) for extracting the pilot signal from the demodulated signal at the time of designating the synthesizing mode, and for determining an incoming delay time difference between the received digital broadcast signal and the comparing OFDM signal from the pilot signal, and

the time computing means (115) determines the transmission time of the digital broadcast signal by adding the second reference time information to the incoming delay time difference.

5. The transmission time measuring apparatus for a broadcast signal according to claim 3, further comprising generation control means (115) for specifying a mode and a guard interval length of the received digital broadcast signal from the demodulated signal in a state in which the received digital broadcast signal is selected and outputted, and for making the generating means (112) execute generation of a comparing OFDM signal corresponding to the specified mode and guard interval length.

6. The transmission time measuring apparatus for a broadcast signal according to claim 1, wherein the time information acquiring means (116) generates reference time information based on a signal transmitted from a satellite of a satellite measurement system.

7. The transmission time measuring apparatus for a broadcast signal according to claim 1, which is used for a transmitting station of a transmission system in which the same digital broadcast signal is transmitted or relayed and present from a plurality of points, wherein

the generating means (112) generates a comparing OFDM signal of an intermediate frequency band of the digital broadcast signal, and
the time difference computing means (111,113,114,115) processes the received digital broadcast signal and comparing OFDM signal of the intermediate frequency band.

8. The transmission time measuring apparatus for a broadcast signal according to claim 1, wherein

the generating means (112) generates a complex form comparing OFDM signal, and
the time difference computing means (111,113,114,115) orthogonal-converts the received signal, and processes the received digital broadcast signal along with the comparing OFDM signal in complex form.

9. A transmission time measuring method comprising receiving a digital broadcast signal whose mode and guard interval length are specified by an OFDM , Orthogonal Frequency Division Multiplex, transmission format and in which a pilot signal having already-known amplitude and phase characteristics is repeatedly inserted at a given symbol cycle, and measuring the transmission time of the received digital broadcast signal, the transmission time measuring method comprising:

generating a comparing OFDM signal whose mode and guard interval length are coincident with those of the received digital broadcast signal;
setting a switching mode in which the received digital broadcast signal and the comparing OFDM signal are alternately outputted, and measuring first reference time information at the time of acquiring symbol synchronization timing of the received digital broadcast signal when the received digital broadcast signal is selected;
measuring second reference time information at the time of acquiring symbol synchronization timing of the comparing OFDM signal when the comparing OFDM signal is selected;
determining a time difference between the first reference time information and the second reference time information;
determining whether or not the time difference is within a tolerance, and when the time difference is out of the tolerance, controlling the generation timing of the comparing OFDM signal such that the time difference is made to be within the tolerance, and thereafter, when the time difference is made to be within the tolerance, setting a synthesizing mode in which the received digital broadcast signal and the comparing OFDM signal are synthesized;
demodulating the synthesized signal at the time of designating the synthesizing mode, and extracting the pilot signal from the demodulated signal, and determining an incoming delay time difference between the received digital broadcast signal and the comparing OFDM signal from the pilot signal; and
determining the transmission time of the digital broadcast signal by adding the reference time information at the time of transmitting the comparing OFDM signal to the incoming delay time difference.

10. A transmission apparatus which receives a transmission signal from a transmission path, and modulates and outputs said signal using an OFDM modulator comprising:

the transmission time measuring apparatus (141) according to claim 1;
a delay apparatus (117) which delays at least one of an input signal and an output signal of the OFDM modulator by an arbitrary delay amount; and
delay control means (117) for controlling the delay amount of the delay apparatus (117) based on a measured result by the transmission time measuring apparatus (141).

11. A relay apparatus comprising:

the transmission time measuring apparatus (141) according to claim 1;
a delay apparatus (117) which delays an OFDM modulated signal by an arbitrary delay amount; and
delay control means (117) for controlling the delay amount of the delay apparatus (117) based on a measured result by the transmission time measuring apparatus (141).

12. A delay time measuring apparatus which measures delay time of a signal processing system processing a digital broadcast signal by using the transmission time measuring apparatus according to claim 1, the delay time measuring apparatus comprising:

first time measuring means for directly inputting the digital broadcast signal to the transmission time measuring apparatus, and measuring the transmission time of the input signal;
second time measuring means for inputting the digital broadcast signal to the transmission time measuring apparatus via the signal processing system, and measuring the transmission time of the input signal; and
computing means for determining the delay time on the basis of the measured result by the first and second measuring means.

13. The delay time measuring apparatus according to claim 12, wherein
the first time measuring means inputs the digital broadcast signal to the transmission time measuring apparatus (141) via a switcher (133) by using the switcher (133) which selectively leads out an input signal and an output signal of the signal processing system at a predetermined switching timing, and
the second time measuring means inputs the output signal of the signal processing system to the transmission time measuring apparatus (141) via the switcher(133).

14. The delay time measuring apparatus according to claim 12, wherein
the first time measuring means directly inputs the digital broadcast signal to the signal processing means of the transmission time measuring apparatus (141), and
the second time measuring means directly inputs the output signal of the signal processing system to the signal processing means of the transmission time measuring apparatus (141).

15. The delay time measuring apparatus according to claim 12, whereinthe computing means determines the delay time based on the measure result obtained by one of the first and second time measuring means and a measured result which is separately provided.

16. The delay time measuring apparatus according to claim 12, further comprising collecting means for collecting transmission time information of the digital broadcast signal which have been respectively measured at least one of a plurality of transmitting stations and relay stations transmitting a digital broadcast signal, wherein
the computing means determines the transmission delay time on the basis of the collected result.

17. The delay time measuring apparatus according to claim 16, further comprising difference computing means for determining a difference between the transmission delay time obtained by the computing means and a transmission delay time which is separately provided.

## Patentansprüche

1. Übertragungszeitmessgerät für ein Rundfunksignal, in welchem ein Pilotsignal mit bereits bekannten Amplituden- und Phaseneigenschaften wiederholt in einem vorgegebenen Symbolzyklus eingefügt ist, und das ein digitales Rundfunksignal empfängt, dessen Moden- und Schutzintervalllänge durch ein OFDM-Übertragungsformat - ein Orthogonalfrequenzbereichsmultiplex-Übertragungsformat - spezifiziert sind, und das die Übertragungszeit des empfangenen digitalen Rundfunksignals misst, wobei das Übertragungszeitmessgerät umfasst:

ein Erzeugungsmittel (112) zum Erzeugen eines Vergleichs-OFDM-Signals, dessen Moden- und Schutzintervalllänge mit denen des empfangenen digitalen Rundfunksignals übereinstimmen,
ein Zeitinformationsakquiriermittel (116) zum Akquirieren einer Referenzzeitinformation zu der Zeit eines Übertragens des Vergleichs-OFDM-Signals,
ein Zeitdifferenzrechenmittel (111, 113, 114, 115) zum Bestimmen einer Eingangsverzögerungszeitdifferenz zwischen dem empfangenen digitalen Rundfunksignal und dem Vergleichs-OFDM-Signal durch Bezugnahme auf das Vergleichs-OFDM-Signal, und
ein Zeitrechenmittel (115) zum Bestimmen der Übertragungszeit des digitalen Rundfunksignals durch Addieren der Referenzzeitinformation zu der Eingangsverzögerungszeitdifferenz.

2. Übertragungszeitmessgerät für ein Rundfunksignal gemäß Anspruch 1, wobei das Zeitdifferenzrechenmittel umfasst:

ein Synthetisiermittel (111) zum Synthetisieren des empfangenen digitalen Rundfunksignals und des Vergleichs-OFDM-Signals zur Ausgabe eines synthetisierten Signals,
ein Demoduliermittel (113) zum Demodulieren des synthetisierten Signals zur Ausgabe eines demodulierten Signals, und
ein Rechenmittel (114, 115) zum Extrahieren des Pilotsignals aus dem demodulierten Signal und zum Bestimmen einer Eingangsverzögerungszeitdifferenz zwischen dem empfangenen digitalen Rundfunksignal und dem Vergleichs-OFDM-Signal aus dem Pilotsignal.

3. Übertragungszeitmessgerät für ein Rundfunksignal gemäß Anspruch 1, wobei das Zeitdifferenzrechenmittel umfasst:

ein Auswahlmittel (111) zum selektiven Ausleiten des empfangenen digitalen Rundfunksignals und/oder des Vergleichs-OFDM-Signals, um ein ausgewähltes Signal auszugeben, ein Demodulationsmittel (113) zum Demodulieren des ausgewählten Signals, um ein demoduliertes Signal auszugeben, ein Zeitakquiriermittel (115) zum Akquirieren einer Symbolsynchronisationszeit des empfangenen digitalen Rundfunksignals und einer Symbolsynchronisationszeit des Vergleichs-OFDM-Signals aus dem demodulierten Signal, ein Rechenmittel (115) zum Akquirieren einer ersten Referenzzeitinformation zu der Zeit des Akquirierens der Symbolsynchronisationszeit des empfangenen digitalen Rundfunksignals und einer zweiten Referenzzeitinformation zu der Zeit des Akquirierens der Symbolsynchronisationszeit des Vergleichs-OFDM-Signals und zum Bestimmen einer Zeitdifferenz zwischen der ersten und der zweiten Referenzzeitinformation, und ein Steuermittel (115) zum Bestimmen, ob die Zeitdifferenz innerhalb einer Toleranz ist oder nicht, und wenn die Zeitdifferenz außerhalb der Toleranz ist, zum Steuern einer Erzeugungszeit des Vergleichssignalerzeugungsmittels, so dass die Zeitdifferenz so gemacht ist, dass sie innerhalb der Toleranz ist, und wobei das Zeitrechenmittel (115) die Übertragungszeit des digitalen Rundfunksignals durch Addieren der Zeitdifferenz innerhalb der Toleranz zu der zweiten Zeitinformation bestimmt.

4.  Übertragungszeitmessgerät für ein Rundfunksignal gemäß Anspruch 1, wobei das Zeitdifferenzrechenmittel umfasst:

ein Verarbeitungsmittel (111), das einen Synthetisiermodus, der das empfangene digitale Rundfunksignal und das Vergleichs-OFDM-Signal zur Ausgabe eines Prozesssignals synthetisiert, und einen Schaltmodus hat, der selektiv das empfangene digitale Rundfunksignal und/oder das Vergleichs-OFDM-Signal zur Ausgabe des verarbeiteten Signals ausleitet, ein Demodulationsmittel (113) zum Demodulieren des verarbeiteten Signals, um ein demoduliertes Signal auszugeben, ein Zeitakquiriermittel (115) zum Akquirieren einer Symbolsynchronisationszeit des empfangenen digitalen Rundfunksignals und einer Symbolsynchronisationszeit des Vergleichs-OFDM-Signals von dem demodulierten Signal zu der Zeit des Bestimmens des Schaltmodus, ein erstes Rechenmittel (115) zum Akquirieren einer ersten Referenzzeitinformation zu der Zeit des Akquirierens der Symbolsynchronisationszeit des empfangenen digitalen Rundfunksignals und einer zweiten Referenzzeitinformation zu der Zeit des Akquirierens der Symbolsynchronisationszeit des Vergleichs-OFDM-Signals und zum Bestimmen einer Zeitdifferenz zwischen der ersten und der zweiten Referenzzeitinformation, ein Steuermittel (115) zum Bestimmen ob die Zeitdifferenz innerhalb einer Toleranz ist oder nicht, und wenn die Zeitdifferenz außerhalb der Toleranz ist, zum Steuern einer Erzeugungszeit des Erzeugungsmittels (112), so dass die Zeitdifferenz so gemacht ist, dass sie innerhalb der Toleranz ist, und danach, wenn die Zeitdifferenz so gemacht ist, dass sie innerhalb der Toleranz ist, das Prozessmittel (111) so zu machen, dass es den Synthetisierungsmodus ausführt, und ein zweites Rechenmittel (114, 115) zum Extrahieren des Pilotsignals aus dem demodulierten Signal zu der Zeit des Bestimmens des Synthetisierungsmodus und zum Bestimmen einer Eingangsverzögerungszeitdifferenz zwischen dem empfangenen digitalen Rundfunksignal und dem Vergleichs-OFDM-Signal von dem Pilotsignal, und wobei das Zeitrechenmittel (115) die Übertragungszeit des digitalen Rundfunksignals durch Addieren der zweiten Referenzzeitinformation zu der Eingangsverzögerungszeitdifferenz bestimmt.

5.  Übertragungszeitmessgerät für ein Rundfunksignal gemäß Anspruch 3, ferner umfassend ein Erzeugungssteuermittel (115) zum Spezifizieren einer Moden- und einer Schutzintervalllänge des empfangenen digitalen Rundfunksignal von dem demodulierten Signal in einem Zustand, in welchem das empfangene digitale Rundfunksignal ausgewählt und ausgegeben wird, und um das Erzeugungsmittel (112) zu veranlassen ein Vergleichs-OFDM-Signal, das zu der spezifizierten Moden- und Schutzintervalllänge korrespondiert, zu erzeugen.

6.  Übertragungszeitmessgerät für ein Rundfunksignal gemäß Anspruch 1, wobei das Zeitinformationsakquiriermittel (116) eine Referenzzeitinformation basierend auf einem Signal, das von einem Satellit oder einem Satellitenmesssystem übertragen wird, erzeugt.

7.  Übertragungszeitmessgerät für ein Rundfunksignal gemäß Anspruch 1, welches für eine Übertragungsstation eines Übertragungssystems verwendet wird, in welcher dasselbe digitale Rundfunksignal übertragen oder weitergegeben und von einer Vielzahl von Punkten präsentiert wird, wobei

das Erzeugungsmittel (112) ein Vergleichs-OFDM-Signal eines Zwischenfrequenzbandes des digitalen Rundfunksignals erzeugt, und
das Zeitdifferenzrechenmittel (111, 113, 114, 115) das empfangene, digitale Rundfunksignal verarbeitet und mit dem Vergleichs-OFDM-Signal des Zwischenfrequenzbandes vergleicht.

8. Übertragungszeitmessgerät für ein Rundfunksignal gemäß Anspruch 1, wobei
das Erzeugungsmittel (112) eine komplexe Form eines Vergleichs-OFDM-Signals erzeugt, und
das Zeitdifferenzrechenmittel (111, 113, 114, 115) das empfangene Signal orthogonal konvertiert und das empfangene digitale Rundfunksignal zusammen mit dem Vergleichs-OFDM-Signal in komplexer Form verarbeitet.

9. Übertragungszeitmessverfahren, das umfasst:

Empfangen eines digitalen Rundfunksignals, dessen Moden- und Schutzintervalllänge durch ein OFDM-Übertragungsformat, ein Orthogonalfrequenzbereichsmultiplex-Übertragungsformat, spezifiziert ist, und in welchem ein Pilotsignal, das bereits bekannte Amplituden- und Phaseneigenschaften hat, wiederholt in einen gegebenen Symbolzyklus eingeführt ist, und Messen der Übertragungszeit des empfangenen digitalen Rundfunksignals,
wobei das Übertragungszeitmessverfahren umfasst:

Erzeugen eines Vergleichs-OFDM-Signals, dessen Moden- und Schutzintervalllänge mit solchen des empfangenen digitalen Rundfunksignals übereinstimmen,
Setzen eines Schaltmodus, in welchem das empfangene digitale Rundfunksignal und das Vergleichs-OFDM-Signal alternierend ausgegeben werden, und Messen einer ersten Referenzzeitinformation zu der Zeit des Akquirierens einer Symbolsynchronisationszeit des empfangenen digitalen Rundfunksignals, wenn das empfangene digitale Rundfunksignal ausgewählt ist,
Messen einer zweiten Referenzzeitinformation zu der Zeit des Akquirierens einer Symbolsynchronisationszeit des Vergleichs-OFDM-Signals, wenn das Vergleichs-OFDM-Signal ausgewählt ist,
Bestimmen einer Zeitdifferenz zwischen der ersten Referenzzeitinformation und der zweiten Referenzzeitinformation,
Bestimmen ob die Zeitdifferenz innerhalb einer Toleranz ist oder nicht, und wenn die Zeitdifferenz außerhalb der Toleranz ist, Steuern der Erzeugungszeit des Vergleichs-OFDM-Signals, so dass die Zeitdifferenz so gemacht ist, dass sie innerhalb der Toleranz ist, und danach, wenn die Zeitdifferenz so gemacht ist, dass sie innerhalb der Toleranz ist, Setzen eines Synthetisiermodus, in welchem das empfangene digitale Rundfunksignal und das Vergleichs-OFDM-Signal synthetisiert sind,
Demodulieren des synthetisierten Signals zu der Zeit des Auswählens des Synthetisiermodus und Extrahieren des Pilotsignals von dem demodulierten Signals, und Bestimmen einer Eingangsverzögerungszeitdifferenz zwischen dem empfangenen digitalen Rundfunksignal und dem Vergleichs-OFDM-Signal aus dem Pilotsignal, und Bestimmen der Übertragungszeit des digitalen Rundfunksignals durch Addieren der Referenzzeitinformation zu der Zeit des Übertragens des Vergleichs-OFDM-Signals zu der Eingangsverzögerungszeitdifferenz.

10. Übertragungsgerät, welches ein Rundfunksignal von einem Übertragungspfad empfängt und das Signal unter Verwendung eines OFDM-Modulators moduliert und ausgibt, wobei das Übertragungsgerät umfasst:

das Übertragungszeitmessgerät (141) gemäß Anspruch 1,
ein Verzögerungsgerät (117), welches ein Eingabesignal und/oder ein Ausgabesignal des OFDM-Modulators durch ein beliebiges Verzögerungsausmaß verzögert, und
ein Verzögerungssteuermittel (117) zum Steuern des Verzögerungsausmaßes des Verzögerungsgeräts (117) basierend auf einem Messergebnis durch das Übertragungszeitmessgerät (114).

11. Relaisgerät, das umfasst:

das Übertragungszeitmessgerät (141) gemäß Anspruch 1,
ein Verzögerungsgerät (117), welches ein OFDMmodularisiertes Signal durch ein beliebiges Verzögerungsausmaß verzögert, und
ein Verzögerungssteuermittel (117) zum Steuern des Verzögerungsausmaßes des Verzögerungsgeräts (117) basierend auf einem Messergebnis durch das Übertragungszeitmessgerät (141).

12. Verzögerungszeitmessgerät, welches eine Verzögerungszeit eines Signalverarbeitungssystems misst, das ein digitales Rundfunksignal unter Verwendung des Übertragungszeitmessgeräts gemäß Anspruch 1 verarbeitet, wobei das Verzögerungszeitmessgerä#t umfasst:

> ein erstes Zeitmessmittel zum direkten Eingeben des digitalen Rundfunksignals an das Übertragungszeitmessgerät und Messen der Übertragungszeit des Eingabesignals,
> ein zweites Zeitmessmittel zum Eingeben des digitalen Rundfunksignals an das Übertragungszeitmessgerät über das Signalverarbeitungssystem und Messen der Übertragungszeit des Eingabesignals, und
> ein Rechenmittel zum Bestimmen der Verzögerungszeit auf der Basis des Messergebnisses durch die ersten und zweiten Messmittel.

13. Verzögerungszeitmessgerät gemäß Anspruch 12, wobei

das erste Zeitmessmittel das digitale Rundfunksignal an das Übertragungszeitmessgerät (141) über einen Schalter (133) unter Verwendung des Schalters (133), welcher selektiv ein Eingabesignal und ein Ausgabesignal des Signalverarbeitungssystems zu einer vorbestimmten Schaltzeit ausleitet, eingibt, und

das zweite Zeitmessmittel das Ausgabesignal des Signalverarbeitungssystems an das Übertragungszeitmessgerät (141) über den Schalter (133) eingibt.

14. Verzögerungszeitmessgerät gemäß Anspruch 12, wobei

das erste Zeitmessmittel das digitale Rundfunksignal direkt an das Signalverarbeitungsmittel des Übertragungszeitmessgeräts (141) eingibt, und

das zweite Zeitmessmittel direkt das Ausgabesignal des Signalverarbeitungssystems an das Signalverarbeitungsmittel des Übertragungszeitmessgeräts (141) eingibt.

15. Verzögerungszeitmessgerät gemäß Anspruch 12, wobei das Rechenmittel die Verzögerungszeit basierend auf dem Messergebnis, das entweder durch das erste oder das zweite Zeitmessmittel erhalten wird, und einem Messergebnis, welches separat vorgesehen ist, bestimmt.

16. Verzögerungszeitmessgerät gemäß Anspruch 12, ferner umfassend ein Sammelmittel zum Sammeln einer Übertragungszeitinformation des digitalen Rundfunksignals, welches jeweils an zumindest einer von einer Mehrzahl von Übertragungsstationen und Relaisstationen, die ein digitales Rundfunksignal übertragen, gemessen wurde, wobei

das Rechenmittel die Übertragungsverzögerungszeit auf der Basis des Sammelergebnisses bestimmt.

17. Verzögerungszeitmessgerät gemäß Anspruch 16, ferner umfassend ein Differenzrechenmittel zum Bestimmen einer Differenz zwischen der Übertragungsverzögerungszeit, die durch das Rechenmittel erhalten wird, und einer Übertragungsverzögerungszeit, welche separat vorgesehen ist.

## Revendications

1. Appareil de mesure de temps de transmission pour un signal de diffusion, dans lequel un signal pilote ayant des caractéristiques d'amplitude et de phase déjà connues est inséré de façon répétée à un cycle de symbole donné, et qui reçoit un signal de diffusion numérique dont le mode et la longueur d'intervalle de garde sont spécifiés par un format de transmission OFDM, Multiplexage par répartition orthogonale de la fréquence, et qui mesure le temps de transmission du signal de diffusion numérique reçu, l'appareil de mesure de temps de transmission comprenant :

> des moyens de génération (112) pour générer un signal OFDM de comparaison dont le mode et la longueur d'intervalle de garde coïncident avec ceux du signal de diffusion numérique reçu ;
> des moyens d'acquisition d'informations de temps (116) pour acquérir des informations de temps de référence au moment de la transmission du signal OFDM de comparaison ;
> des moyens de calcul de différence de temps (111, 113, 114, 115) pour déterminer une différence de temps de retard entrant entre le signal de diffusion numérique reçu et le signal OFDM de comparaison en se référant au signal OFDM de comparaison ; et
> des moyens de calcul de temps (115) pour déterminer le temps de transmission du signal de diffusion numérique en ajoutant les informations de temps de référence à la différence de temps de retard entrant.

2. Appareil de mesure de temps de transmission pour un signal de diffusion selon la revendication 1, dans lequel les moyens de calcul de différence de temps comprennent :

> des moyens de synthèse (111) pour synthétiser le signal de diffusion numérique reçu et le signal OFDM de comparaison afin de sortir un signal synthétisé ;
> des moyens de démodulation (113) pour démoduler le signal synthétisé afin de sortir un signal démodulé ; et
> des moyens de calcul (114, 115) pour extraire le signal pilote du signal démodulé, et pour déterminer une différence de temps de retard entrant entre le signal de diffusion numérique reçu et le signal OFDM de comparaison à partir du signal pilote.

3. Appareil de mesure de temps de transmission pour un signal de diffusion selon la revendication 1, dans lequel les moyens de calcul de différence de temps comprennent :

des moyens de sélection (111) pour conduire sélectivement vers la sortie l'un quelconque du signal de diffusion numérique reçu et du signal OFDM de comparaison afin de sortir un signal sélectionné ;

des moyens de démodulation (113) pour démoduler le signal sélectionné afin de sortir un signal démodulé ;

des moyens d'acquisition de positionnement temporel (115) pour acquérir un positionnement temporel de synchronisation de symbole du signal de diffusion numérique reçu et un positionnement temporel de synchronisation de symbole du signal OFDM de comparaison à partir du signal démodulé ;

des moyens de calcul (115) pour acquérir des premières informations de temps de référence au moment de l'acquisition du positionnement temporel de synchronisation de symbole du signal de diffusion numérique reçu et des secondes informations de temps de référence au moment de l'acquisition du positionnement temporel de synchronisation de symbole du signal OFDM de comparaison, et pour déterminer une différence de temps entre les premières et secondes informations de temps de référence ; et

des moyens de commande (115) pour déterminer si oui ou non la différence de temps est dans une tolérance, et lorsque la différence de temps est hors de la tolérance, pour commander un positionnement temporel de génération des moyens de génération de signal de comparaison de sorte que la différence de temps soit amenée à être dans la tolérance, et

les moyens de calcul de temps (115) déterminent le temps de transmission du signal de diffusion numérique en ajoutant la différence de temps dans la tolérance aux secondes informations de temps de référence.

4. Appareil de mesure de temps de transmission pour un signal de diffusion selon la revendication 1, dans lequel les moyens de calcul de différence de temps comprennent :

des moyens de traitement (111) ayant un mode de synthèse synthétisant le signal de diffusion numérique reçu et le signal OFDM de comparaison afin de sortir un signal traité, et un mode de commutation conduisant sélectivement vers la sortie l'un quelconque du signal de diffusion numérique reçu et du signal OFDM de comparaison afin de sortir le signal traité ;

des moyens de démodulation (113) pour démoduler le signal traité afin de sortir un signal démodulé ;

des moyens d'acquisition de positionnement temporel (115) pour acquérir un positionnement temporel de synchronisation de symbole du signal de diffusion numérique reçu et un positionnement temporel de synchronisation de symbole du signal OFDM de comparaison à partir du signal démodulé au moment de la désignation du mode de commutation ;

des premiers moyens de calcul (115) pour acquérir des premières informations de temps de référence au moment de l'acquisition du positionnement temporel de synchronisation de symbole du signal de diffusion numérique reçu et des secondes informations de temps de référence au moment de l'acquisition du positionnement temporel de synchronisation de symbole du signal OFDM de comparaison, et pour déterminer une différence de temps entre les premières et les secondes informations de temps de référence ;

des moyens de commande (115) pour déterminer si oui ou non la différence de temps est dans une tolérance, et lorsque la différence de temps est hors de la tolérance, pour commander un positionnement temporel de génération des moyens de génération (112) de sorte que la différence de temps soit amenée à être dans la tolérance, et par la suite, lorsque la différence est amenée à être dans la tolérance, pour amener les moyens de traitement (111) à exécuter le mode de synthèse ; et

des seconds moyens de calcul (114, 115) pour extraire le signal pilote du signal démodulé au moment de la désignation du mode de synthèse, et pour déterminer une différence de temps de retard entrant entre le signal de diffusion numérique reçu et le signal OFDM de comparaison à partir du signal pilote, et

les moyens de calcul de temps (115) déterminent le temps de transmission du signal de diffusion numérique en ajoutant les secondes informations de temps de référence à la différence de temps de retard entrant.

5. Appareil de mesure de temps de transmission pour un signal de diffusion selon la revendication 3, comprenant en outre des moyens de commande de génération (115) pour spécifier un mode et une longueur d'intervalle de garde du signal de diffusion numérique reçu à partir du signal démodulé dans un état dans lequel le signal de diffusion numérique reçu est sélectionné et sorti, et pour amener les moyens de génération (112) à exécuter la génération d'un signal OFDM de comparaison correspondant au mode et à la longueur d'intervalle de garde spécifiés.

6. Appareil de mesure de temps de transmission pour un signal de diffusion selon la revendication 1, dans lequel les moyens d'acquisition d'informations de temps (116) génèrent des informations de temps de référence sur la base d'un signal transmis à partir d'un satellite d'un système de mesure par satellite.

7. Appareil de mesure de temps de transmission pour un signal de diffusion selon la revendication 1, qui est utilisé pour une station de transmission d'un système de transmission dans lequel le même signal de diffusion numérique est transmis ou relayé et présent à partir d'une pluralité de points, dans lequel les moyens de génération (112) génèrent un signal OFDM de comparaison d'une bande de fréquence intermédiaire du signal de diffusion numérique, et les moyens de calcul de différence de temps (111, 113, 114, 115) traitent le signal de diffusion numérique reçu et le signal OFDM de comparaison de la bande de fréquence intermédiaire.

8. Appareil de mesure de temps de transmission pour un signal de diffusion selon la revendication 1, dans lequel
les moyens de génération (112) génèrent un signal OFDM de comparaison de forme complexe, et
les moyens de calcul de différence de temps (111, 113, 114, 115) convertissent orthogonalement le signal reçu, et traitent le signal de diffusion numérique reçu conjointement avec le signal OFDM de comparaison sous forme complexe.

9. Procédé de mesure de temps de transmission comprenant la réception d'un signal de diffusion numérique dont le mode et la longueur d'intervalle de garde sont spécifiés par un format de transmission OFDM, Multiplexage par répartition orthogonale de la fréquence, et dans lequel un signal pilote ayant des caractéristiques d'amplitude et de phase déjà connues est inséré de façon répétée à un cycle de symbole donné, et la mesure du temps de transmission du signal de diffusion numérique reçu,
le procédé de mesure de temps de transmission comprenant :

la génération d'un signal OFDM de comparaison dont le mode et la longueur d'intervalle de garde coïncident avec ceux du signal de diffusion numérique reçu ;
l'établissement d'un mode de commutation dans lequel le signal de diffusion numérique reçu et le signal OFDM de comparaison sont sortis alternativement, et

la mesure de premières informations de temps de référence au moment de l'acquisition d'un positionnement temporel de synchronisation de symbole du signal de diffusion numérique reçu lorsque le signal de diffusion numérique reçu est sélectionné ;
la mesure de secondes informations de temps de référence au moment de l'acquisition d'un positionnement temporel de synchronisation de symbole du signal OFDM de comparaison lorsque le signal OFDM de comparaison est sélectionné ;
la détermination d'une différence de temps entre les premières informations de temps de référence et les secondes informations de temps de référence ;
la détermination de si oui ou non la différence de temps est dans une tolérance, et lorsque la différence de temps est hors de la tolérance, la commande du positionnement temporel de génération du signal OFDM de comparaison de sorte que la différence de temps soit amenée à être dans la tolérance, et par la suite, lorsque la différence de temps est amenée à être dans la tolérance, l'établissement d'un mode de synthèse dans lequel le signal de diffusion numérique reçu et le signal OFDM de comparaison sont synthétisés ;
la démodulation du signal synthétisé au moment de la désignation du mode de synthèse, et l'extraction du signal pilote du signal démodulé, et la détermination d'une différence de temps de retard entrant entre le signal de diffusion numérique reçu et le signal OFDM de comparaison à partir du signal pilote ; et
la détermination du temps de transmission du signal de diffusion numérique en ajoutant les informations de temps de référence au moment de la transmission du signal OFDM de comparaison à la différence de temps de retard entrant.

10. Appareil de transmission qui reçoit un signal de transmission en provenance d'un trajet de transmission, et module et sort ledit signal en utilisant un modulateur OFDM, comprenant :

l'appareil de mesure de temps de transmission (141) selon la revendication 1 ;
un appareil de retard (117) qui retarde au moins l'un d'un signal d'entrée et d'un signal de sortie du modulateur OFDM d'une quantité de retard arbitraire ; et
des moyens de commande de retard (117) pour commander la quantité de retard de l'appareil de retard (117) sur la base d'un résultat mesuré par l'appareil de mesure de temps de transmission (141).

**11.** Appareil de relais comprenant :

l'appareil de mesure de temps de transmission (141) selon la revendication 1 ;
un appareil de retard (117) qui retarde un signal modulé OFDM d'une quantité de retard arbitraire ; et
des moyens de commande de retard (117) pour commander la quantité de retard de l'appareil de retard (117) sur la base d'un résultat mesuré par l'appareil de mesure de temps de transmission (141).

**12.** Appareil de mesure de temps de retard qui mesure un temps de retard d'un système de traitement de signal traitant un signal de diffusion numérique en utilisant l'appareil de mesure de temps de transmission selon la revendication 1, l'appareil de mesure de temps de retard comprenant :

des premiers moyens de mesure de temps pour entrer directement le signal de diffusion numérique dans l'appareil de mesure de temps de transmission, et mesurer le temps de transmission du signal d'entrée ;
des seconds moyens de mesure de temps pour entrer le signal de diffusion numérique dans l'appareil de mesure de temps de transmission via le système de traitement de signal, et mesurer le temps de transmission du signal d'entrée ; et
des moyens de calcul pour déterminer le temps de retard sur la base du résultat mesuré par les premiers et seconds moyens de mesure.

**13.** Appareil de mesure de temps de retard selon la revendication 12, dans lequel
les premiers moyens de mesure de temps entrent le signal de diffusion numérique dans l'appareil de mesure de temps de transmission (141) via un commutateur (133) en utilisant le commutateur (133) qui conduit sélectivement vers la sortie un signal d'entrée et un signal de sortie du système de traitement de signal à un positionnement temporel de commutation prédéterminé, et
les seconds moyens de mesure de temps entrent le signal de sortie du système de traitement de signal dans l'appareil de mesure de temps de transmission (141) via le commutateur (133).

**14.** Appareil de mesure de temps de retard selon la revendication 12, dans lequel
les premiers moyens de mesure de temps entrent directement le signal de diffusion numérique dans les moyens de traitement de signal de l'appareil de mesure de temps de transmission (141), et
les seconds moyens de mesure de temps entrent directement le signal de sortie du système de traitement de signal dans les moyens de traitement de signal de l'appareil de mesure de temps de transmission (141).

**15.** Appareil de mesure de temps de retard selon la revendication 12, dans lequel les moyens de calcul déterminent le temps de retard sur la base du résultat de mesure obtenu par l'un des premiers et seconds moyens de mesure de temps et d'un résultat mesuré qui est fourni séparément.

**16.** Appareil de mesure de temps de retard selon la revendication 12, comprenant en outre des moyens de collecte pour collecter des informations de temps de transmission du signal de diffusion numérique qui ont été mesurées respectivement au niveau d'au moins une d'une pluralité de stations de transmission et de stations de relais transmettant un signal de diffusion numérique, dans lequel
les moyens de calcul déterminent le temps de retard de transmission sur la base du résultat collecté.

**17.** Appareil de mesure de temps de retard selon la revendication 16, comprenant en outre des moyens de calcul de différence pour déterminer une différence entre le temps de retard de transmission obtenu par les moyens de calcul et un temps de retard de transmission qui est fourni séparément.

FIG. 1

(note)MIP:Mega-frame initialization packet

Overall mega-frame structure

FIG. 3

FIG. 2

FIG. 4

EP 1 469 646 B1

FIG. 5

31          32              36          37·
Tuner  →  A/D  →      →  FFT  →  TPS Demodulator

1 symbol Delayer  →  Correlation Computing Circuit  ～34
33

35～  Symbol Synchronization Detector

38
GPS Receiver  →  Reception Timing Measurer  →

39

FIG. 6A                                    Time

FIG. 6B                                    Time

                                           Time
FIG. 7A

                                           Time
FIG. 7B

                                           Time
FIG. 7C

**FIG. 8**

**FIG. 9**

**FIG. 10**

**FIG. 11**

Start

Set switching mode — ~ST3a

Acquire the frame and symbol synchronization timing of the broadcasting OFDM signal, and compute a first time — ~ST3b

Select comparing OFDM signal — ~ST3c

Acquire the frame and symbol synchronous timing of the comparing OFDM signal, and compute the second time — ~ST3d

Compute a difference between the first time and the second time, and adjust a transmission timing — ~ST3e

Set a synthesizing mode — ~ST3f

Acquire delay time difference information — ~ST3g

Compute the transmission time of the broadcasting OFDM signal — ~ST3h

End

FIG. 12

FIG. 13

Frequency

Time

Carrier interval

Symbol interval

Data

Scattered pilot (SP) calls

TPS carriers

FIG. 14

FIG. 15

FIG. 16

FIG. 17

FIG. 18

FIG. 19

FIG. 20

FIG. 21

FIG. 22

FIG. 23

EP 1 469 646 B1

FIG. 24

FIG. 25

**EP 1 469 646 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6128276 A

**Non-patent literature cited in the description**

- Digital Video Broadcasting (DVB); Frame structure, channel coding and modulation for digital terrestrial television. *ETSI Draft EN300 744,* January 1999

- Digital. Video Broadcasting (DVB); DVB mega-frame for single frequency network (SFN) synchronization). *ETSI TS 101 191,* April 1998